# EUROPÄISCHE PATENTSCHRIFT

(11) **EP 3 231 577 B1**
(45) Veröffentlichungstag und Bekanntmachung des Hinweises auf die Patenterteilung: **11.10.2023**
(21) Anmeldenummer: 17171941.2
(22) Anmeldetag: 06.05.2010
(51) Int. Cl.: B29C 49/48, B29C 33/30, B29C 49/06

(54) **BLASFORMANORDNUNG**
BLOW MOULDING ASSEMBLY
DISPOSITIF DE MOULAGE PAR SOUFFLAGE

(30) Priorität: 06.05.2009 DE 102009019845; 26.10.2009 DE 102009050637
(43) Veröffentlichungstag der Anmeldung: 18.10.2017
(62) Teilanmeldung aus: 14180712.3
(73) Patentinhaber: Krones AG, 93073 Neutraubling (DE)
(72) Erfinder: Meinzinger, Rupert, 93073 Neutraubling (DE); Steinberger, Harald, 93073 Neutraubling (DE); Höllriegl, Thomas, 93073 Neutraubling (DE); Fleischmann, Hans-Jürgen, 93073 Neutraubling (DE); Voth, Klaus, 93073 Neutraubling (DE); Albrecht, Thomas, 93073 Neutraubling (DE); Blochmann, Erik, 93073 Neutraubling (DE); Seger, Martin, 93073 Neutraubling (DE); Senn, Konrad, 93073 Neutraubling (DE); Winzinger, Frank, 93073 Neutraubling (DE); Wallner, Matthias, 93073 Neutraubling (DE); Stoiber, Christian, 93073 Neutraubling (DE)
(74) Vertreter: Hannke Bittner & Partner mbB Regensburg

(56) Entgegenhaltungen:
- WO-A1-2005/042231
- WO-A1-2007/012308
- DE-A1- 10 152 050
- DE-C1- 3 613 543
- FR-A1- 2 552 366
- FR-A1- 2 659 265
- US-A- 4 472 128
- US-A- 5 968 560
- US-A1- 2002 076 463
- US-A1- 2004 202 745

## Beschreibung

Die vorliegende Erfindung bezieht sich auf eine Blasformanordnung zur Herstellung von Kunststoffbehältnissen. Derartige Blasformanordnungen sind aus dem Stand der Technik seit langem bekannt. Diese Blasformanordnungen sind dabei Bestandteil von Blasstationen, innerhalb derer Kunststoffvorformlinge zu Kunststoffbehältnissen expandiert werden. Zu diesem Zweck weisen diese Blasformanordnungen üblicher Weise eine Blasform auf, deren Innenwandung an die Kontur des herzustellenden Behältnisses angepasst ist. Mittels Luftdruck werden die Vorformlinge zu Kunststoffbehältnissen expandiert.

Die Blasformen sind dabei auswechselbar in Blasformträgern bzw. Mutterformen angeordnet. Im Falle eines Verschleißes dieser Blasformen, aber auch, wenn eine Umstellung auf andere Behältnistypen vorgenommen werden soll, werden dabei die besagten Blasformen von den Blasformträgern abgenommen und durch andere Blasformen ersetzt. Dieser Austausch der Blasformen ist im Stand der Technik eine relativ aufwendige Prozedur. So werden zunächst mehrere Befestigungsschrauben gelöst und anschließend Klauen bzw. Verriegelungsbügel verschwenkt, um die Blasform freizugeben. Auch der Wiedereinbau einer Blasform ist relativ aufwendig. Teilweise behindern die Verriegelungsbügel beim Einbau das zuvor zu erfolgende Einsetzen der Blasformen in den Formträger bzw. die Mutterform und/oder die Formschale.

Die WO 2005/042231 A1 beschreibt eine schlauchförmige Blasformschale, die sowohl in Längs- als auch in Querrichtung in einzelne Teile oder in Längsrichtung in einzelne Teile unterteilt ist, wobei jedes dieser Teile eine zylindrische Schalenform aufweist; die Teile (MI), (M3) und (M5) sind ergänzend, ebenso wie die Teile (M2), (M4) und (M6); die ergänzenden Teile sind mittels Schrauben aneinander befestigt; an den Längsenden der Zusatzteile befinden sich kalibrierte Nuten mit rechteckigem Profil, die dazu dienen, die Ausrichtung in der Längsachse zu gewährleisten; an den Teilen (MF1) und (MF2) befinden sich kalibrierte Nuten, auf denen die ebenfalls kalibrierten Formeinsätze montiert sind; zwischen den ergänzenden Teilen der Form befindet sich eine Verriegelungsvorrichtung, die aus Stiften besteht, die in den Hohlräumen der Teile der Form verborgen und mit Schrauben daran befestigt sind; diese Verriegelungsvorrichtung hat die Aufgabe, die Drehung zwischen den Teilen zu verhindern und ihre Entfernung oder ihren Austausch zu ermöglichen.

Die vorliegende Erfindung wird primär unter Bezugnahme auf die Anordnung bzw. Befestigung einer Blasform an einer Formträgerschale beschrieben, es wird jedoch darauf hingewiesen, dass die Erfindung auch auf die Anordnung einer Blasform an einer Mutterform, die Anordnung einer Mutterform an einer Formträgerschale oder einem Blasformträger, oder auch die Anordnung einer Formträgerschale oder Mutterform an einem Blasformträger anwendbar ist. Daher wird im Folgenden neben den Begriffen Mutterform, Blasformträger oder Blasformschale auch der Begriff Blasformhalter verwendet, der sowohl eine Mutterform, eine Blasformschale als auch einen Blasformträger bezeichnen kann. Der Begriff Blasformhalter bezeichnet daher in diesem Zusammenhang ein Element, welches ein weiteres Element zumindest teilweise aufnimmt, d.h. der Blasformhalter ist insbesondere ein ein weiteres Element aufnehmendes Element.

Weiterhin wird neben den Begriffen Blasform, Mutterform bzw. Formträgerschale auch der Begriff Blasformeinheit verwendet, der sowohl die Blasform als auch die Mutterform, als auch die Blasformschale, bezeichnen kann, welche jeweils einen Hohlraum ausbilden, der zur Expansion des Kunststoffvorformlings dient. Im Falle der Mutterform bzw. der Blasformschale dient der Hohlraum zur Aufnahme einer Blasform und damit mittelbar zur Expansion des Kunststoffvorformlings. Damit handelt es sich bei der Blasformeinheit insbesondere um ein aufgenommenes Element, genauer um ein radial innerhalb des Blasformhalters angeordnetes und von diesem Blasformhalter aufgenommenes Element.

Die DE 10 2005 035 233 A1 beschreibt eine Vorrichtung nach dem Oberbegriff des Anspruchs 1 zur Halterung von Blasformsegmenten. Dabei ist ein Arretierelement vorgesehen, welches sowohl zur Bereitstellung einer formschlüssigen Halterung als auch zur Bereitstellung einer kraftschlüssigen Halterung des Blasformsegmentes ausgebildet ist. Genauer gesagt, ist hier ein Hebel vorgesehen, mittels dem ein Arretierelement verschoben werden kann, um die Arretierung einer Blasform freizugeben. Doch auch diese Vorrichtung kann gegebenenfalls beim Einsetzen von Blasformsegmenten hinderlich sein.

Die US 6,615472 B2 beschreibt eine Schnellwechsel-Blasformanordnung. Auch diese Anordnung weist eine Trägerplatte und eine Blasformhälfte auf, die an die Trägerplatte befestigt werden kann.

Der vorliegenden Erfindung liegt daher die Aufgabe zugrunde, die Montage und Demontage von derartigen Blasformeinheiten gegenüber den Blasformhaltern zu vereinfachen. Dies wird erfindungsgemäß durch eine Blasformanordnung nach Anspruch 1 erreicht. Vorteilhafte Ausführungsformen und Weiterbildungen sind Gegenstand der Unteransprüche.

Eine erfindungsgemäße Blasformanordnung zum Umformen von Kunststoffvorformlingen zu Kunststoffbehältnissen weist eine (insbesondere von einem weiteren Element aufgenommene) Blasformeinheit auf, welche einen Hohlraum ausbildet, innerhalb dessen die Kunststoffvorformlinge zu Kunststoffbehältnissen ausgebildet werden bzw. der zur Expansion der Kunststoffvorformlinge dient, wobei die Blasformeinheit wenigstens zweiteilig ausgebildet ist.

Weiterhin weist die Anordnung einen Blasformhalter zur Aufnahme der Blasformeinheit auf, wobei der Blasformhalter wenigstens zwei Formhalterelemente zur Aufnahme von Teilen der Blasform aufweist. Weiterhin ist ein Verriegelungsmechanismus vorgesehen, um wenigstens einen Teil der Blasformeinheit gegenüber wenigstens einem Formhalterelement zu arretieren. Dabei weist der Verriegelungsmechanismus ein bezüglich einer vorgegebenen Achse schwenk- oder verschiebbares Eingriffselement auf, welches in einem arretierten Zustand eines Teils der Blasformeinheit gegenüber einem Formhalterelement an einem Abschnitt des Teils der Blasformeinheit anliegt.

Erfindungsgemäß weist der Verriegelungsmechanismus ein Betätigungselement auf, um eine Arretierung zwischen dem Formhalterelement und der Blasformeinheit bzw. dem Teil der Blasformeinheit zu lösen, wobei eine Bewegung und insbesondere eine Schwenkbewegung und/oder Verschiebebewegung dieses Betätigungselementes mit der Bewegung und insbesondere der Schwenkbewegung und/oder Verschiebebewegung des Eingriffselementes (insbesondere mechanisch) gekoppelt ist. Das Betätigungselement dient bevorzugt auch dazu, um eine Arretierung zwischen dem Formhalterelement und der Blasformeinheit herzustellen.

Vorzugsweise handelt es sich bei der Blasformeinheit um eine Blasform, die unmittelbar den Hohlraum zur Expansion des Vorformlings ausbildet. Vorteilhaft handelt es sich bei dem Blasformhalter um eine Blasformschale, welche die Blasform unmittelbar aufnimmt. Bevorzugt handelt es sich bei der Bewegung des Eingriffselements und besonders bevorzugt auch des Betätigungselements um eine Schwenk- bzw. Drehbewegung um die vorgegebene Achse, wobei besonders bevorzugt ausschließlich eine derartige Schwenk- bzw. Drehbewegung und keine zusätzliche Verschiebebewegung vorgesehen ist.

Damit wird erfindungsgemäß vorgeschlagen, dass eine Bewegung und insbesondere Drehung des Betätigungselementes, bei dem es sich beispielsweise um einen Schraubmutterkopf oder dergleichen handeln kann, direkt an die Bewegung und insbesondere die Drehung des Eingriffselementes gekoppelt ist. Auf diese Weise kann sichergestellt werden, dass nach einem Lösen der Blasform aus dem Formträger die Eingriffselemente einen Wiedereinbau beispielsweise einer weiteren Blasform nicht behindern.

Dabei ist es möglich, dass das Eingriffselement in einer Ebene schwenkbar ist, welche parallel ist zu einer Trennebene, welche die beiden Blasformhälften bzw. auch die Formhalterhälften voneinander trennt. Es wäre jedoch auch möglich, dass das Eingriffselement um eine Achse schwenkbar ist, welche parallel zu einer Längsrichtung der umzuformenden Behältnisse verläuft.

Bei einer weiteren vorteilhaften Ausführungsform ist ein maximaler Drehwinkel des Eingriffselementes geringer als 360°, bevorzugt geringer als 180°, bevorzugt geringer als 100° und bevorzugt geringer als 90°. Durch diese Ausführungsform kann erreicht werden, dass das Eingriffselement nur um genau definierte Winkel drehbar ist, und daher können Behinderungen durch dieses Eingriffselement beim Wiedereinbau von weiteren Blasformsegmenten verhindert werden. Weiterhin ergeben sich auf diese Weise sehr genau definierte Drehstellungen für die Eingriffselemente. Vorteilhaft ist jedenfalls keine Volldrehung des Eingriffselements möglich.

Bei einer weiteren vorteilhaften Ausführungsform ist das Eingriffselement an einem Träger angeordnet, und dieser Träger ist an dem Blasformhalter angeordnet. Dabei ist es möglich, dass der Träger ein streifenartiges Element ist, welches beispielsweise mit Schraubverbindungen fest, jedoch lösbar, an dem Blasformhalter angeordnet ist. An diesem Träger wiederum sind die besagten Eingriffselemente drehbar angeordnet.

Bei einer weiteren vorteilhaften Ausführungsform weist der Verriegelungsmechanismus wenigstens zwei Eingriffselemente auf, die in einer Längsrichtung der Blasformeinheit hintereinander angeordnet sind. Dies bedeutet, dass die Blasformeinheit entlang ihrer Längsrichtung an wenigstens zwei Positionen gegenüber dem Blasformhalter stabilisiert bzw. arretiert ist.

Bei einer weiteren vorteilhaften Ausführungsform weist der Verriegelungsmechanismus wenigstens zwei Eingriffselemente auf, und die Blasformeinheit ist zumindest teilweise zwischen diesen Eingriffselementen angeordnet. Dies bedeutet, dass die Blasformeinheit beidseitig bezüglich des Hohlraums bzw. bezüglich des zu expandierenden Behältnisses gegenüber dem Blasformhalter jeweils von drehbaren Eingriffselementen arretiert ist. Es wäre jedoch auch möglich, dass die Blasformeinheit an einer Seite ohne Eingriffselemente beispielsweise eingehängt wird, und drehbare Eingriffselemente lediglich an der anderen Seite vorgesehen sind.

Vorzugsweise weist die Blasformeinheit Ausnehmungen bzw. Aussparungen auf, in welche die Eingriffelemente eingreifen.

Bei einer weiteren vorteilhaften Ausführungsform rastet wenigstens ein Eingriffselement in wenigstens einer Drehstellung ein. Vorteilhaft rastet das Eingriffselement in genau zwei Drehstellungen ein, wobei es sich hierbei um eine geöffnete und um eine geschlossene Stellung handelt. Auf diese Weise können bei einer Demontage der Blasformeinheit die einzelnen Eingriffseinrichtungen jeweils in die Öffnungsstellung gedreht werden und rasten in dieser Stellung ein. Bei einem Einsetzen einer weiteren Blasformeinheit behindern alsdann diese Eingriffselemente den Einsetzvorgang nicht. Weiterhin sind auf diese Weise die Arretierungsstellungen der Eingriffselemente genau definiert.

Bei einer weiteren vorteilhaften Ausführungsform ist das Eingriffselement mittels wenigstens zwei Kugelkörpern drehbar gelagert. Vorzugsweise sind drei derartige Kugelkörper vorgesehen, welche zwischen dem Eingriffselement und dem Blasformhalter bzw. zwischen dem Eingriffselement und dem Träger angeordnet sind. Über diese drei Kugelkörper wird das Eingriffselement definiert abgestützt. Anstelle von Kugelkörpern könnten auch zylinder- oder kegelförmige Körper vorgesehen sein.

Weiterhin sind die besagten Kugelkörper vorteilhaft in Laufbahnen angeordnet. Auf diese Weise wird eine sehr einfach definierte Drehung des Eingriffselementes erreicht. Außerdem können über die besagten Laufbahnen auch die beiden Raststellungen des Eingriffselementes gegenüber dem Blasformhalter bzw. gegenüber dem o. g. Träger definiert werden.

Das Eingriffselement weist wenigstens eine abgerundete Außenfläche auf, wobei diese abgerundete Außenfläche an einem Ende des Eingriffselementes vorgesehen ist, welches einem Eingriffsbereich, mit dem das Eingriffselement in einem arretierten Zustand die Blasformeinheit kontaktiert, gegenüberliegt. Diese abgerundete Außenfläche erlaubt eine (insbesondere begrenzte) Drehbewegung des Eingriffselementes gegenüber dem Blasformhalter.

Bei einer weiteren vorteilhaften Ausführungsform weist die Blasformanordnung eine Federeinrichtung auf, um das Eingriffselement gegenüber dem Träger bzw. dem Blasformträger vorzuspannen. Dabei ist es beispielsweise möglich, dass dieses Federelement unterhalb des genannten Trägers angeordnet ist, und das Eingriffselement auf den Träger zuzieht. Dabei werden insbesondere auch die oben erwähnten Kugelkörper durch das besagte Federelement eingeklemmt.

Bei einer weiteren vorteilhaften Ausführungsform weist die Blasformanordnung einen Sicherungsmechanismus auf, der ein Schließen der Blasformeinheit bei nicht korrekt arretierter Blasformeinheit verhindert. So wäre es beispielsweise möglich, dass nach einem Einbau einer Blasform vergessen wird, einzelne Sicherungselemente wieder zu verriegeln. Der Sicherungsmechanismus verhindert, dass die Blasformeinheit vollständig geschlossen werden kann, so dass dem Benutzer die Fehlorientierung eines Sicherungselementes auffällt, und er dies nachbessern kann.

Bei einer weiteren vorteilhaften Ausführungsform weist die Blasformanordnung wenigstens zwei Betätigungselemente auf, und jedes dieser Betätigungselemente weist wiederum jeweils einen Vorsprung und eine Ausnehmung auf, wobei in einem geschlossenen Zustand der Blasformeinheit wenigstens ein Vorsprung eines Betätigungselementes in die Ausnehmung des anderen Betätigungselementes eingreift. Bevorzugt sind jedoch die Vorsprünge und die Ausnehmungen so angeordnet, dass ein derartiger wechselseitiger Eingriff lediglich erfolgt, wenn beide Sicherungseinrichtungen korrekt angezogen sind und ansonsten sich beispielsweise die beiden Vorsprünge kontaktieren und auf diese Weise ein Schließen der Blasformeinheit verhindert wird.

Bei einer weiteren Ausführungsform weist die Blasformanordnung wenigstens eine Flüssigkeitsleitung mit wenigstens einem Zuführanschluss zum Zuführen von Flüssigkeit auf und der Blasformhalter weist wenigstens einen Versorgungsanschluss zum Versorgen der Flüssigkeitsleitung mit Flüssigkeit auf. Der Zuführanschluss ist mit dem Versorgungsanschluss durch einen Verriegelungsvorgang zum Arretieren der Blasformeinheit mit dem Blasformhalter verbindbar.

Bei dieser Ausführungsform wird der Umstand ausgenutzt, dass durch das Arretieren der Blasformeinheit an dem Blasformhalter hohe Kräfte zwischen dem Blasformhalter und der Blasformeinheit aufgebracht werden können. Diese Kräfte können verwendet werden, um Flüssigkeitsverbindungen zwischen diesen beiden Elementen herzustellen. Diese Flüssigkeitsverbindungen dienen bevorzugt zum Temperieren der Blasformeinheit. Auf diese Weise kann auf einen zusätzlichen Arbeitsgang zum Anschließen von Flüssigkeitsleitungen an die Blasform verzichtet werden.

Vorteilhaft werden der Versorgungsanschluss und der Zuführanschluss dichtend bzw. flüssigkeitsdicht miteinander verbunden. Besonders bevorzugt sind zu diesem Zweck aufeinander pressbare Dichtflächen vorgesehen, wobei besonders bevorzugt wenigstens einer dieser Dichtflächen durch ein elastisches Material, wie beispielsweise einen O-Ring, gebildet wird.

Es wird darauf hingewiesen, dass diese Ausführungsform auch unabhängig von der genauen Gestaltung des Verriegelungsmechanismus Anwendung finden kann, d.h. ggfs. auch bei Verriegelungsmechanismen, welche aus dem Stand der Technik bekannt sind bzw. sich aus dem Oberbegriff von Anspruch 1 oder Anspruch 16 der vorliegenden Anmeldung ergeben.

Die vorliegende Erfindung ist weiterhin auf eine Blasformanordnung zum Umformen von Kunststoffvorformlingen zu Kunststoffbehältnissen mit einer Blasformeinheit gerichtet, welche Blasformeinheit einen Hohlraum ausbildet, innerhalb dessen die Kunststoffvorformlinge zu Kunststoffbehältnissen expandierbar sind, wobei die Blasformeinheit wenigstens zweiteilig ausgebildet ist, und einen Blasformhalter zur Aufnahme der Blasformeinheit aufweist, wobei der Blasformhalter wenigstens zwei Formhalterelemente zur Aufnahme von Teilen der Blasformeinheit aufweist.

Erfindungsgemäß weist die Blasformanordnung Mittel zum Erzeugen eines Unterdrucks, welcher zwischen wenigstens einem Teil der Blasformeinheit und wenigstens einem Formhalterelement wirkt, auf, wobei durch diesen Unterdruck der Teil der Blasformeinheit an dem Formhalterelement gehalten wird.

Diese Mittel stellen damit hier gleichzeitig bevorzugt auch einen Verriegelungsmechanismus dar, um wenigstens einen Teil der Blasformeinheit gegenüber wenigstens einem Formhalterelement zu arretieren.

Bei dieser Ausgestaltung wird vorgeschlagen, die Blasform (ggfs. ausschließlich) mit Hilfe eines Unterdrucks bzw. eines Vakuums an dem Blasformhalter zu arretieren. Die besagten Mittel zum Erzeugen und insbesondere auch zum Aufrechterhalten eines Unterdrucks können dabei eine Vakuumquelle aufweisen. Auch wäre es möglich, dass in einer Wandung des Formhalterelements ein beweglicher Kolben angeordnet ist, der das besagte Vakuum erzeugt bzw. aufrecht erhält.

Vorzugsweise weist die Blasformanordnung eine Ventileinrichtung wie insbesondere aber nicht ausschließlich ein Rückschlagventil auf, welches zur Aufrechterhaltung des Unterdrucks dient.

Die vorliegende Erfindung ist weiterhin auf eine Streckblasmaschine nach Anspruch 14 mit einer Vielzahl von Blasstationen gerichtet, wobei in den Blasstationen Kunststoffvorformlinge zu Kunststoffbehältnissen umformbar sind. Erfindungsgemäß weist wenigstens eine dieser Blasstationen eine Blasformanordnung der oben beschriebenen Art auf.

Weitere Vorteile und Ausführungsformen ergeben sich aus den beigefügten Zeichnungen.

Darin zeigen:
- Fig. 1: Eine Blasformanordnung nach dem Stand der Technik;
- Fig. 2a - 2f: Eine erste Ausführungsform einer erfindungsgemäßen Blasformanordnung;
- Fig. 3a - 3h: Eine zweite Ausführungsform einer erfindungsgemäßen Blasformanordnung;
- Fig. 4a - 4c: Eine dritte Ausführungsform einer erfindungsgemäßen Blasformanordnung;
- Fig. 5a - 5f: Eine vierte Ausführungsform einer Blasformanordnung, die nicht Teil der vorliegenden Erfindung ist;
- Fig. 6a - 6d: Eine fünfte Ausführungsform einer Blasformanordnung, die nicht Teil der vorliegenden Erfindung ist;
- Fig. 7a - 7c: Eine sechste Ausführungsform einer Blasformanordnung, die nicht Teil der vorliegenden Erfindung ist;

- Fig. 8a - 8e: Eine siebte Ausführungsform einer Blasformanordnung, die nicht Teil der vorliegenden Erfindung ist;
- Fig. 9a - 9c: Eine achte Ausführungsform einer Blasformanordnung, die nicht Teil der vorliegenden Erfindung ist;
- Fig. 10a - 10d: Eine neunte Ausführungsform einer Blasformanordnung, die nicht Teil der vorliegenden Erfindung ist;
- Fig. 11a - 11c: Eine zehnte Ausführungsform einer Blasformanordnung, die nicht Teil der vorliegenden Erfindung ist;
- Fig. 12a - 12d: Eine elfte Ausführungsform Blasformanordnung, die nicht Teil der vorliegenden Erfindung ist;
- Fig. 13a - 13d: Eine zwölfte Ausführungsform einer Blasformanordnung, die nicht Teil der vorliegenden Erfindung ist;
- Fig. 14a - 14d: Eine dreizehnte Ausführungsform einer Blasformanordnung, die nicht Teil der vorliegenden Erfindung ist;

- Fig. 15a - 15c: Eine weitere Ausführungsform einer Blasformanordnung, die nicht Teil der vorliegenden Erfindung ist;
- Fig. 16a - 16f: Eine weitere Ausführungsform einer Blasformanordnung, die nicht Teil der vorliegenden Erfindung ist;
- Fig. 17: Eine weitere Ausführungsform einer Blasformanordnung, die nicht Teil der vorliegenden Erfindung ist;
- Fig. 18: Eine weitere Ausführungsform einer Blasformanordnung, die nicht Teil der vorliegenden Erfindung ist;
- Fig. 19a - 19b: Eine weitere Ausführungsform einer Blasformanordnung, die nicht Teil der vorliegenden Erfindung ist;
- Fig. 20a - 20d: Eine weitere Ausführungsform einer Blasformanordnung, die nicht Teil der vorliegenden Erfindung ist;
- Fig. 21a - 21b: Eine weitere Ausführungsform einer Blasformanordnung, die nicht Teil der vorliegenden Erfindung ist;
- Fig. 22a - 22b: Eine weitere Ausführungsform einer Blasformanordnung, die nicht Teil der vorliegenden Erfindung ist;
- Fig. 23a - 23d: Eine weitere Ausführungsform einer Blasformanordnung, die nicht Teil der vorliegenden Erfindung ist;
- Fig. 24a - 24c: Eine weitere Ausführungsform einer Blasformanordnung, die nicht Teil der vorliegenden Erfindung ist.

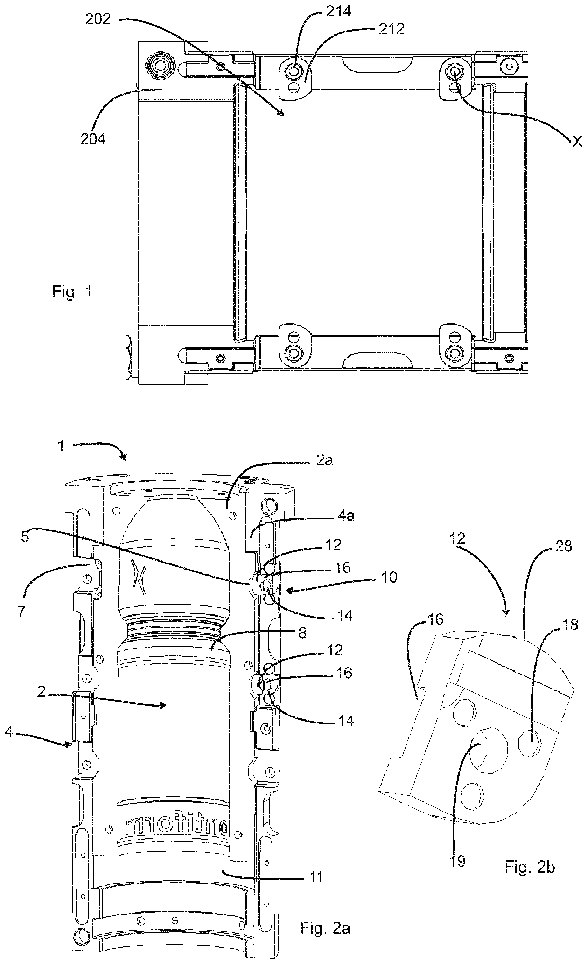

Fig. 1 zeigt eine teilweise Darstellung einer Blasformanordnung nach dem Stand der Technik. Dabei bezieht sich das Bezugszeichen 204 auf eine Blasformschale, genauer gesagt einen Teil eines solchen Blasformträgers. In diesem Blasformträger wird, wie durch das Bezugszeichen 202 angedeutet, eine Blasform (nicht gezeigt) angeordnet. Zum Verriegeln dieser Blasform gegenüber der Blasformschale sind hier vier Eingriffselemente 212 vorgesehen, deren Endabschnitte in Bereiche der Blasform hineinragen und diese so stabilisieren. Weiterhin sind vier Betätigungsmittel 214 in Form von Schrauben vorgesehen. Werden diese Schrauben 214 gelöst, so können die Eingriffselemente 212 um die jeweiligen Schwenkachsen X geschwenkt werden. Dabei ist jedoch eine Stellung dieser Eingriffselemente 212 nicht gesichert, sondern diese sind frei um die besagte Achse X schwenkbar.

Fig. 2a zeigt eine erste Ausführungsform einer erfindungsgemäßen Blasformanordnung. Dabei bezieht sich das Bezugszeichen 2 wiederum auf eine Blasform, genauer gesagt einen Teil 2a dieser Blasform. Dieser Teil 2a wird mit einem weiteren (nicht gezeigtem) Teil zusammengelegt, um in einem Hohlraum 8 einen Kunststoffvorformling zu einem Behältnis umzuformen. Das Bezugszeichen 4 zeigt in seiner Gesamtheit wiederum eine Blasformschale, genauer gesagt einen Teil bzw. eine Hälfte 4a dieser Blasformschale. Gegenüber dieser Blasformschale muss die Blasform 2 arretiert werden.

Zum Arretieren der Blasform bzw. der Blasformhälften sind hier vier Eingriffselemente 12 vorgesehen, wobei jedoch bloß zwei dieser Eingriffselemente 12 dargestellt sind. Diese Eingriffselemente 12 sind dabei drehfest mit Betätigungselementen 14, bei denen es sich beispielsweise um Schraubköpfe handeln kann, gekoppelt. Um diese drehfeste Kopplung zu erreichen, greifen die Betätigungselemente in eine Nut 16 der Eingriffselemente 12 ein. Durch eine Drehung der Betätigungselemente 14 werden damit auch die Eingriffselemente 16 um deren Schwenkachse geschwenkt.

Weiterhin erkennt man Ausnehmungen 5, welche jeweils in dem Teil 2a der Blasform 2 angeordnet sind. In diese Ausnehmungen greifen die Eingriffselemente 12 ein.

Man erkennt weiterhin, dass die Blasformschale 4 selbst Ausnehmungen 7 ausweist, in welche Bestandteile des in seiner Gesamtheit mit 10 bezeichneten Arretiermechanismus eingreifen können.

In dem unteren Bereich der Blasformschale 4 kann noch eine (nicht gezeigte) Bodenform bzw. ein Bodenteil angeordnet sein.

Fig. 2b zeigt eine perspektivische Darstellung eines Eingriffselementes 12. Man erkennt, dass das Eingriffselement eine abgerundete Oberfläche 28 in demjenigen Bereich aufweist, der in einem arretierten Zustand auf die Blasform zuweist. Das Bezugszeichen 19 kennzeichnet eine Öffnung, durch welche ein (nicht gezeigter) Bolzen des Betätigungselements 14 hindurch geschoben wird. Durch diese Öffnung 19 wird gleichzeitig auch die Schwenkachse des Eingriffselements definiert. Die Bezugszeichen 18 beziehen sich auf weitere Ausnehmungen, in denen Kugelkörper angeordnet sind, um das Eingriffselement 12 drehbar zu lagern. Weiterhin ist auch hier wieder die Nut 16 zu erkennen, welche für eine drehfeste Verbindung zwischen dem Betätigungselement 16 und dem Eingriffselement 12 sorgt.

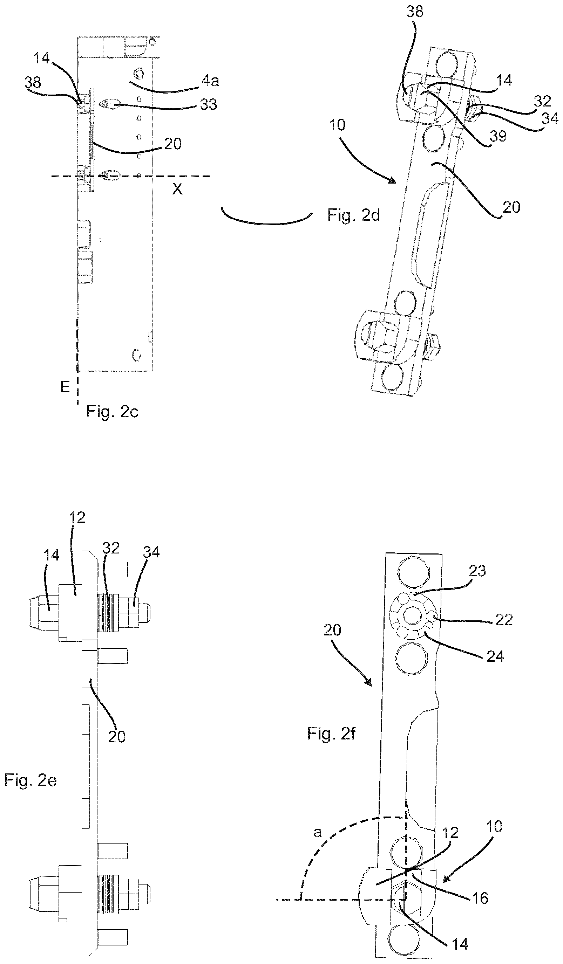

Fig. 2c zeigt eine Seitenansicht einer erfindungsgemäßen Blasformanordnung. Man erkennt hier, dass das Betätigungselement 14 einen Bolzen aufweist, der sich bis in eine Ausnehmung 33, die in der Wandung des Formträgers 4a angeordnet ist, erstreckt. Über diese Ausnehmung 33 kann das Eingriffselement 12 vollständig abgenommen werden. Die beiden Betätigungselemente 14 und auch die Eingriffselemente 12 sind dabei an einem gemeinsamen Träger 20 angeordnet und dieser gemeinsame Träger 20 ist wiederum an der Formschale 4a vorgesehen.

Fig. 2d zeigt eine weitere Ansicht eines erfindungsgemäßen Arretiermechanismus. Man erkennt hier insbesondere einen Vorsprung 38 und eine Ausnehmung 39, die an einem Betätigungselement 14 angeordnet sind. Diese beiden Elemente 38 und 39 dienen als Sicherungsmittel, welche bewirken, dass nur eine ordnungsgemäß arretierte Blasform geschlossen werden kann. In einem montierten Zustand der Blasform ist auch an der gegenüberliegenden Seite, d. h. dem nicht dargestellten Blasformträger 4b ein entsprechender Träger 20 mit einem Betätigungselement 14 vorgesehen. In diesem Falle liegt jedoch in einem korrekt arretierten Zustand der Vorsprung 38 weiter entfernt von der Blasform als die Ausnehmung 39, d. h. umgekehrt zu der in Fig. 2d gezeigten Situation. Damit kann dieser nicht gezeigte weitere Vorsprung in die Ausnehmung 39 eingreifen.

Dies bedeutet, dass ein entsprechender Blasformträger mit der Blasform nur geschlossen werden kann, wenn sämtliche Eingriffselemente 12 korrekt orientiert sind, d. h. jeweils die Blasform kontaktieren. Man erkennt insoweit auch in Fig. 2c, dass die Vorsprünge 38 geringfügig über die Ebene E, welche gleichzeitig auch eine Mittelebene eines geschlossenen Blasformträgers darstellt, hinausragen.

Das Bezugszeichen 34 bezieht sich auf einen Schraubkörper wie eine Schraubenmutter, welche zur Befestigung des Betätigungselements 14 dient.

Fig. 2e zeigt eine weitere Darstellung eines erfindungsgemäßen Arretiermechanismus. Man erkennt hier wiederum die Schraubenmutter 34, sowie auch eine Federungseinrichtung 32 wie hier eine Schraubenfeder, welche dazu dient, um das Eingriffselement 12 gegenüber dem Träger 20 vorzuspannen. Alternativ könnten auch andere Federungseinrichtungen, wie beispielsweise Tellerfedern bzw. Tellerfederpakete eingesetzt werden.

Fig. 2f zeigt eine weitere Darstellung des Trägers 20, wobei hier jedoch eines der beiden Eingriffselemente 12 entfernt wurde. Man erkennt, dass in dem Träger 20 Laufbahnen 24 und kugelförmige Körper 22 vorgesehen sind. Durch die Anordnung dieser drei Laufbahnen 24 wird ermöglicht, dass das Eingriffselement 12 um einen genau definierten Winkel gegenüber dem Trägerelement 20 drehbar ist. Genauer gesagt sind auch drei Mulden 23 vorgesehen, welche bewirken, dass insgesamt eine Drehung des Eingriffselements 12 gegenüber dem Träger 2 definierte End- und Raststellungen aufweist. Das Bezugszeichen a kennzeichnet den Drehwinkel des Eingriffselements 12. Dieser Winkel liegt hier bei 90° kann aber durch entsprechende Anordnung der jeweiligen Raststellen auch anders gewählt werden.

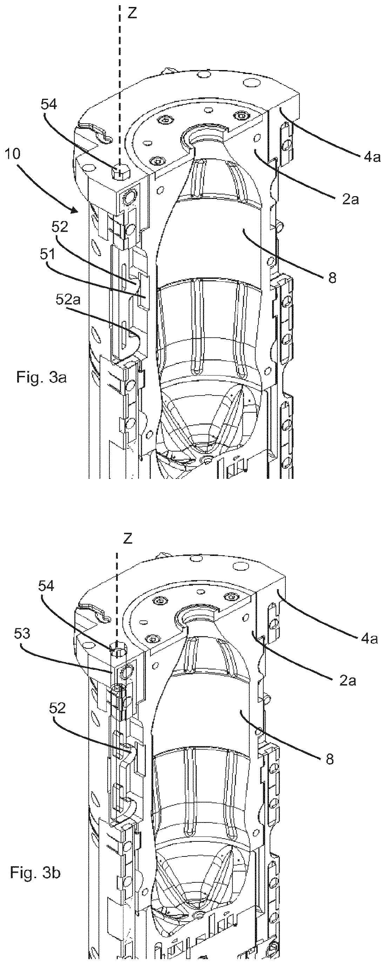

Die Figuren 3a - 3h zeigen eine weitere Ausführungsform einer erfindungsgemäßen Blasformanordnung. Hierbei ist ein Arretiermechanismus 10 vorgesehen, welcher ebenfalls ein Betätigungselement 54 aufweist, welches um eine Achse Z schwenkbar sein kann. Daneben ist es jedoch auch möglich, dass dieses Betätigungselement 54 in der Richtung Z verschoben wird, um eine Arretierung des Teils 2a der Blasform gegenüber der Blasformschale 4a zu erreichen. In Fig. 3b ist der Verlauf einer Stange 53 im Inneren des Blasformträgers 4a dargestellt. Das Bezugszeichen 52 bezieht sich hier wiederum auf Eingriffselemente, welche in einem Bereich der Blasform 2a eingreifen, um diese so zu halten. In den Figuren 3a und 3b ist ein arretierter Zustand des Blasformsegmentes 2a gegenüber dem Formträger 4a bzw. der Mutterform dargestellt. Dabei weisen auch hier die Eingriffselemente 52 eine gekrümmte Oberfläche bzw. Keilfläche 52a auf, welche jedoch nicht unbedingt erforderlich ist.

Die in Fig. 3b angedeutete Stange 53 kann durch ein Festziehen des Betätigungselements 54 bzw. ein Drehen desselben verdrillt werden und erzeugt auf diese Weise eine eigene Federwirkung. Das gezeigte Betätigungselement 54 bzw. dieser Klemmhebel weist dabei wiederum einen Sechskantkopf 54 zur Verstellung auf. Dabei wäre es auch möglich, dieses Betätigungselement an der Unterseite des Formträgers anzuordnen. In diesem Falle wirkt das Betätigungselement 54 unabhängig von der jeweils aufgebrachten Bewegung auf beide Eingriffselemente 52. Auch durch eine Längsverschiebung des Betätigungselements oder auch durch eine Kombination einer Längsverschiebung mit einer Drehbewegung kann ein entsprechendes Einspannen der Blasform erreicht werden.

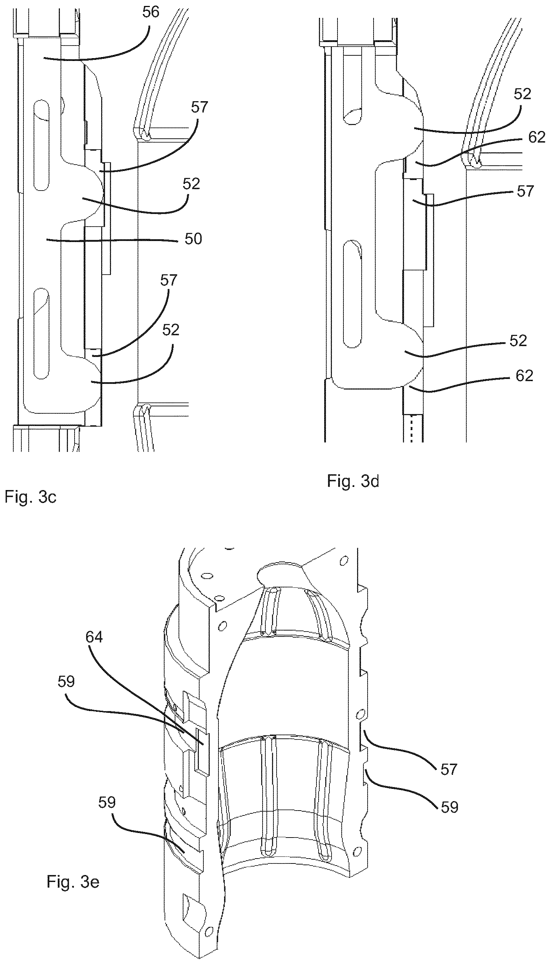

In Fig. 3c ist eine Detaildarstellung des Eingriffskörpers 50 mit den beiden Eingriffselementen 52 dargestellt. Bei der in Fig. 3c gezeigten Darstellung ist der Eingriffskörper 50 in einer Position, in der die Blasform 2a herausgenommen werden kann. Genauer gesagt sind hier hinter den beiden Eingriffselemente 52 jeweils Ausnehmungen 57 der Blasform vorgesehen, so dass eine Bewegung der Blasform 2 senkrecht zur Figurenebene nicht durch die Eingriffselemente 52 gehindert wird. In Fig. 3d ist eine gespannte Position bzw. eine verriegelte Position der Blasform dargestellt. Hier liegen die Eingriffselemente 52 an Stegen 62 der Blasform 2 an und verhindern auf diese Weise ein Herausnehmen derselben.

Damit wird bei der in den Figuren 3a - 3h gezeigten Ausführungsform eine Verriegelung der Blasform gegenüber dem Formträger mit einer zentralen Verriegelungswelle realisiert. Entsprechend könnte auf diese Weise auch eine Mutterform, welche wiederum die Blasform hält, an einem (übergeordneten) Blasformträger angeordnet werden. Wie erwähnt, ist die Blasformschale 4 (und gegebenenfalls auch auf der in den Figuren dargestellten linken Seite ein Druckkissen) mit einer durchgehenden vertikalen Bohrung versehen, in die die besagte Welle 53 eingeführt wäre. An der Welle sind, wie in den Figuren gezeigt, einteilig die erwähnten Eingriffselemente bzw. Spannzungen angeordnet, welche die im Stand der Technik bisher verwendeten Eingriffselemente ersetzen.

Weiterhin wäre es möglich, dass Betätigungselement 54 gemeinsam mit einer Verriegelungswelle auszuführen, welche beispielsweise eine 90°-Biegung aufweist. Bei dieser Biegung wäre einerseits ein Betätigungshebel vorgesehen und dieser könnte andererseits auch zur Arretierung genutzt werden. An der Oberseite des Formträgers 4a bzw. der Blasformschale könnte ein Gegenanschlag angeordnet sein, der bewirkt, dass ein derartiger erwähnter Hebel um 90° leicht überdreht werden könnte, so dass, wie oben erwähnt, die Stange 53 als Drehstabfeder fungiert und sich auch in ihrer Geradlinigkeit leicht durchbiegt. Weiterhin wäre es auch möglich, die in den Fig. 3a - 3h gezeigte Verriegelung elektromagnetisch oder pneumatisch zu betätigen.

Weiterhin ist auszuführen, dass durch den in den Figuren 3a - 3h gezeigten Arretiermechanismus 10 eine relativ hohe Kraft zwischen der Blasform und dem Formträger aufgebracht wird, um ein beispielsweise die Blasform in Ihre Mutterform bzw. auch die Mutterform in dem Formträger in die endgültige Position zu drehen. Üblicherweise ist im Arbeitsbetrieb einer derartigen Vorrichtung auch eine Wasserzuführung hilfreich, um eine Temperierung der Blasform bzw. auch der Mutterform zu erreichen.

Aus diesem Grunde werden im Stand der Technik vor Inbetriebnahme Wasserschläuche angekoppelt. Durch die erwähnten hohen Kräfte kann hier bei der Arretierung der Blasform 2 gegenüber der Blasformschale bzw. auch einer Blasformschale gegenüber einem Blasformträger auch eine Ankoppelung der einzelnen Schläuche mit durchgeführt werden. Dabei wäre es beispielsweise möglich, dass an der Oberseite des Formträgers ein drehbar gelagerter Klotz angeordnet wird, an dessen Außenseite die Wasserschläuche mit einfachen Steckverbindern befestigt sind.

Die Innenseite eines derartigen Klotzes könnte eben bzw. plan gehalten werden, so dass diese als Dichtfläche fungieren könnte. In die bisherigen Wasseranschlüsse der Mutterform oder auch der Blasform könnten entsprechend Quadringe oder sonstige Dichtelemente eingebaut werden, welche durch das Einschwenken der Form fest gegen die Planfläche des Klotzes gepresst werden würden. Durch dieses Andrücken kann gleichzeitig ein Kontakt hergestellt werden, der eine Wasserversorgung der Blasform oder auch der Mutterform ermöglicht.

Weiterhin wäre es möglich, dass ein Mitnehmer an der Formschale bzw. der Blasform vorgesehen wird, der den besagten drehbaren Klotz mit in die endgültige Position dreht. Damit wäre es möglich, eine Mutterform gegenüber einem Formträger mit einem einzigen oder wenigen Handgriffen in Position zu bringen und dabei auch noch die nötigen Wasserverbindungen bzw. Wasserschläuche anzukoppeln.

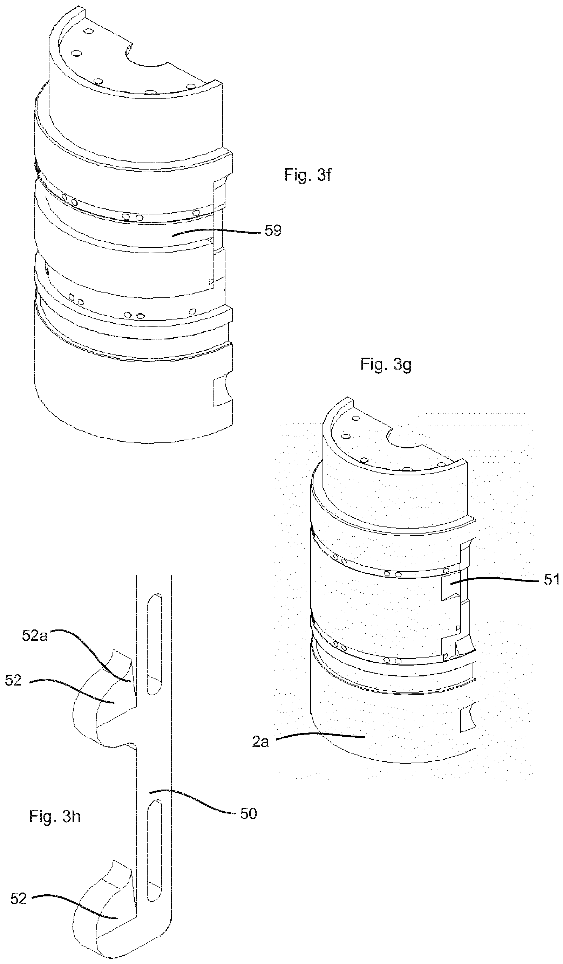

Fig. 3e zeigt eine weitere Darstellung einer Blasform für eine erfindungsgemäße Blasformanordnung. Bei dieser Ausführungsform weist die Blasform zwei umlaufende Ausschnitte 59 auf, um nach einem Entriegeln des Eingriffskörpers 50 die Blasform vollständig aus der Mutterform herausdrehen zu können. Fig. 3f zeigt eine entsprechende Darstellung dieses Blasformteils von hinten.

Bei der in Fig. 3g gezeigten Darstellung sind in der Blasform 2a Ausnehmungen 57 vorgesehen, um die Blasform nach dem Entriegeln aus dem Formträger bzw. der Mutterform herauszuziehen.

Fig. 3h zeigt eine weitere Darstellung des Eingriffskörpers 50 mit den beiden Eingriffselementen 52. Die hier gezeigten, sich leicht schräg erstreckenden Teilflächen bzw. Spannflächen 52a sind jedoch zum Spannen nicht bei jeder Ausführungsform erforderlich. Es wäre jedoch auch möglich, an der Blasform eine entsprechende Schräg- oder Spannfläche (in Form eines Gegenprofils) anzubringen. Daneben könnten auch sowohl an der Blasform als auch an dem Eingriffselement entsprechende Spannflächen vorgesehen sein.

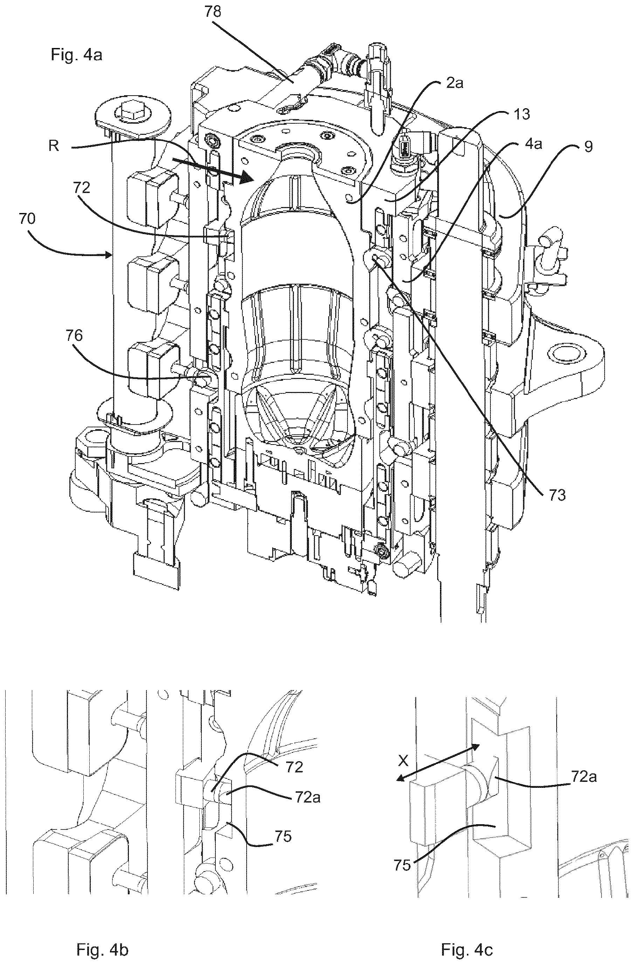

Die Fig. 4a - 4c zeigen eine weitere Ausführungsform einer erfindungsgemäßen Blasformanordnung. Bei dieser Darstellung ist eine Blasform 2a, die Mutterform 13, eine Blasformschale 4a sowie der Formträger 9 dargestellt. Dabei ist hier ein pneumatisch arbeitender Arretiermechanismus vorgesehen. Genauer gesagt sind hier Eingriffselemente 72 vorgesehen, die pneumatisch betätigt werden, um die Blasform 2a gegenüber der Mutterform 4a zu arretieren. Bei der in Fig. 4a gezeigten Ausführungsform sind nur auf der linken Seite diese Eingriffselemente 72 vorgesehen, was bedeutet, dass die Blasform 2a beispielsweise gegen die Mutterform 13 eingedreht werden kann, um auf diese Weise beispielsweise auf der linken Seite an den Eingriffselementen 72 anzuliegen. Pneumatisch wird alsdann die gesamte Arretierung der Blasform 2a gegenüber der Blasformschale 4a bewirkt. Neben einem pneumatischen Arretieren bzw. Verriegeln wäre jedoch auch die Verwendung eines hydraulischen, magnetischen oder motorischen Antriebs denkbar.

Bei der in Fig. 4a gezeigten Darstellung bewegen sich die Eingriffselemente in einer radialen Richtung R der Blasform. Abweichend hiervon wäre es jedoch auch möglich, dass sich die Eingriffselemente in einer tangentialen Richtung der Blasform bewegen, also beispielsweise in Fig. 4a schräg in die Figurenebene hinein. Daneben könnten sich die Eingriffsmittel bei entsprechender Ausgestaltung auch in tangentialer Richtung, hier schräg aus der Figurenebene herausbewegen. Auch auf diese Weise wäre eine Arretierung der Blasform gegenüber der Blasformschale oder der Mutterform möglich. Weiterhin könnten die Eingriffselemente 72 auch hinter der Blasform angeordnet sein und sich dabei bevorzugt in einer ebenfalls tangentialen Richtung gegenüber der Außenwandung der Blasform 2a erstrecken.

Die Fig. 4b zeigt eine Detaildarstellung zur Veranschaulichung der Arretierung. Man erkennt, dass die Eingriffselemente 72 hier wiederum Keilflächen 72a (vgl. Fig. 4c) aufweisen, die eine Arretierung der Blasform bewirken. Entsprechend weist die Blasform eine Ausnehmung 75 auf, in welche die Eingriffselemente 72 eingreifen können. Hierbei ist zu beachten, dass die Eingriffselemente 72 in zwei Richtungen X bewegbar sind, um eine Arretierung und auch ein Lösen dieser Arretierung zu bewirken. Man erkennt hier weiterhin ein Arretierelement 76, welches zum Arretieren der Formschale 4a gegenüber dem Formträger 9 dient.

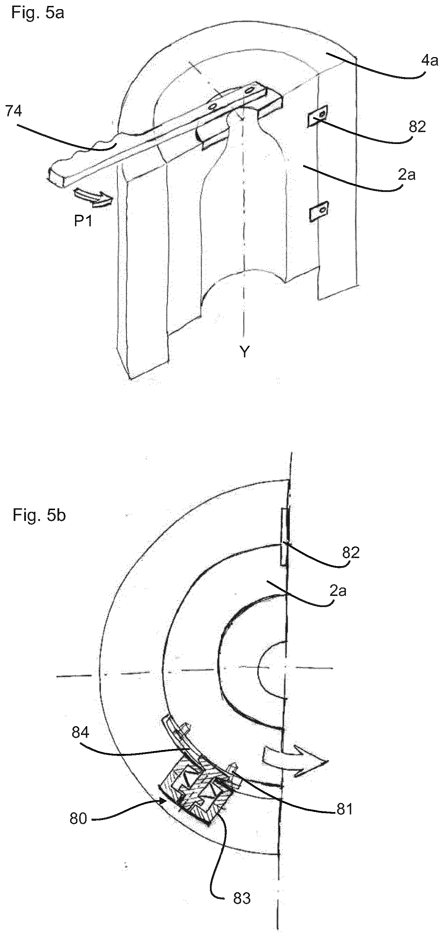

Die Fig. 5a - 5f zeigen eine weitere Ausführungsform einer Blasformanordnung. In Fig. 5a ist dabei wiederum grob schematisch eine Blasformhälfte 2a dargestellt, die in einer Blasformschale 4a angeordnet ist. Die Bezugszeichen 82 beziehen sich wiederum auf Arretiervorsprünge, die hier jedoch fest angeordnet sind, und an denen die Blasform 2a mit ihrer rechten Hälfte anliegt. Das Bezugszeichen 74 bezieht sich auf einen an die Blasform 2a anlegbaren Hebel, mit dessen Hilfe die Blasform aus der Blasformschale 4a bzw. dem Formträger 4a entlang des Pfeils P1 herausgeschwenkt werden kann.

In Fig. 5b ist wiederum ein Arretiermechanismus dargestellt, um die Blasform 2a gegenüber der Blasformschale bzw. der Mutterform 4 zu arretieren. Dieser Verriegelungsmechanismus 80 ist dabei in einer Ausnehmung 83 der Blasformschale angeordnet und ein entsprechendes Gegenstück ist fest mit der Blasform 2a verbunden. Genauer gesagt weist dieses Gegenstück einen Träger 84 auf, der mittels Schraubverbindung 81 an der Blasform 2a angeordnet ist.

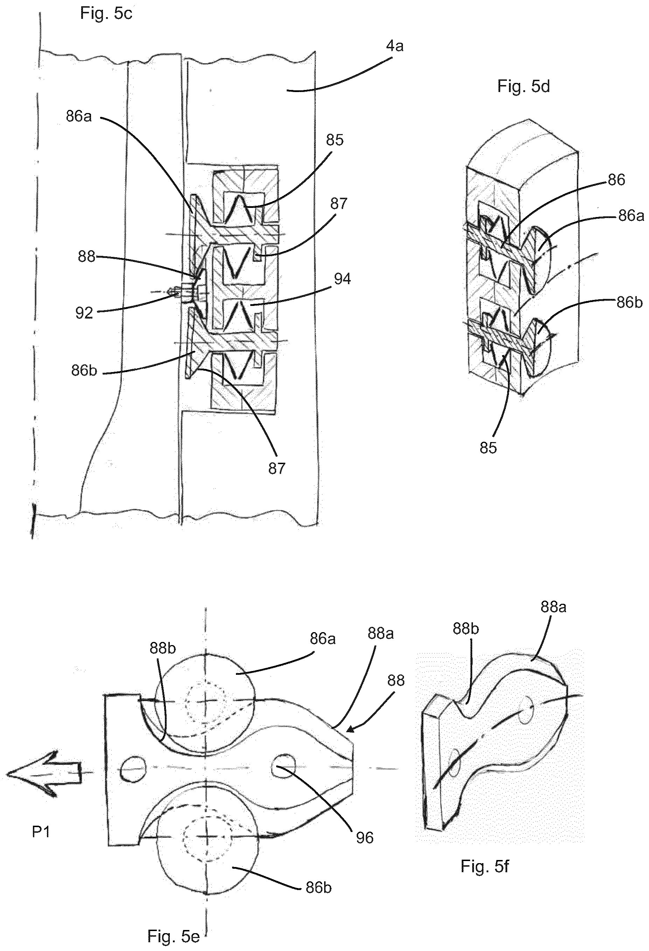

Fig. 5c zeigt eine Detaildarstellung des in Fig. 5b dargestellten Verriegelungsmechanismus 80. Dieser Arretiermechanismus 80 weist dabei zwei Arretierköpfe 86a und 86b auf, die einer radialen Richtung R verschiebbar sind. Ein Federelement 85, welches in einer Ausnehmung 94 angeordnet ist, stellt jeweils die beiden Arretierköpfe 86a und 86b zurück. Diese Arretierköpfe 86a und 86b weisen dabei jeweils Schrägflächen 87 auf, zwischen welche eine Zunge 88, die wiederum an der Blasform angeordnet ist, hineingleiten kann.

Beim Einschwenken der Blasform 2 in die Blasformschale 4 wird die in den Fig. 5e und 5f detailliert gezeigte Zunge 88 zwischen die beiden Köpfe 86a und 86b eingeschoben, diese werden kurzzeitig entgegen der Kraft der Feder 85 gespannt und arretieren anschließend die Zunge 88 und damit auch die Blasform 2. Fig. 5d zeigt eine weitere perspektivische Veranschaulichung zur Darstellung des Arretiermechanismus. In Fig. 5e ist eine Position der Zunge 88 gegenüber den beiden Arretierköpfen 86a und 86b in einem arretierten Zustand dargestellt. Man erkennt, dass die Zunge 88 eine Ausnehmung 88b aufweist, in welche diese beide Köpfe 86a und 86b eingreifen. Auf diese Weise wird eine Arretierung der Blasform gegenüber dem Formträger erreicht. Mittels Bohrungen 96 ist die Zunge 88 fest an der Blasform 2 angeordnet. Zum Herausziehen wird die Zunge entlang des Pfeils P1 gezogen und auf diese Weise werden die beiden Köpfe 86a und 86b angehoben und auf diese Weise wiederum die Arretierung gelöst.

Damit stellen bei der in den Fig. 5a - 5f dargestellten Ausführungsform die beiden Köpfe 86a und 86b gemeinsam das Eingangs erwähnte Betätigungselement dar, welches in einem verriegelten Zustand der Blasformanordnung an einem Abschnitt eines Teils der Blasform 2 anliegt, wobei dieser Abschnitt hier die Zunge 88 ist. Durch das Anheben werden die beiden Köpfe 86a und 86b auch entlang einer vorgegebenen Achse verschoben. Die Zunge 88 stellt hier jedoch auch das Betätigungselement dar, um die Arretierung zwischen dem Formhalterelement 4 und der Blasformeinheit 2 zu lösen, wobei insbesondere eine Bewegung der Köpfe 86a, 86b an eine Bewegung dieser Zunge 88 gekoppelt ist bzw. eine Bewegung der Zunge auch eine Bewegung der Köpfe 86a, 86b zur Folge hat. Damit ist bei dieser Ausführungsform das Betätigungselement auch ein Bestandteil der Blasform, und durch eine Bewegung der Blasform wird auch die daran angeordnete Zunge 88 bewegt.

Es wäre jedoch auch möglich, dass umgekehrt die Köpfe 86a und 86b an der der Blasform angeordnet sind und die Zunge 88 an dem Formhalterelement 4.

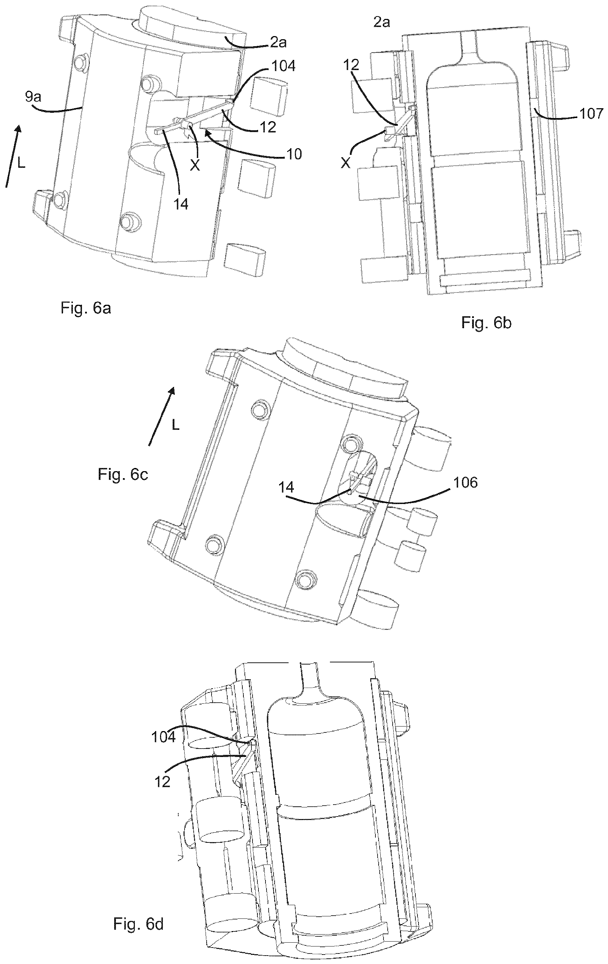

Die Figuren 6a bis 6d zeigen eine weitere Ausführungsform. Bei dieser Ausführungsform ist ebenfalls ein Eingriffselement 12 vorgesehen, welches die Blasform 2a gegenüber einer Blasformschale 4 arretiert. Zu diesem Zweck weist das Eingriffselement 12 einen hakenartigen Endabschnitt auf, der in einen Vorsprung 104, der in der Blasform 2a angeordnet ist, eingreift.

Dabei ist das Eingriffselement 12 hier um eine Achse X schwenkbar. Das Betätigungselement 14 ist für einen Benutzer, genauer gesagt die Hand eines Benutzers, zugänglich, so dass auf diese Weise die Blasform 2a gelöst werden kann. Insbesondere in Fig. 6c erkennt man eine Ausnehmung 106, die in der Blasformschale 4 angeordnet ist, und welche der Benutzer manuell eingreifen kann. Es wäre bei der in den Figuren 6a - 6d gezeigten Ausführungsform auch möglich, dass mehrere derartiger Eingriffselemente in der Längsrichtung L hintereinander angeordnet sind. Auch könnten diese Eingriffselemente 12 miteinander durch einen Längshebel (nicht gezeigt) gekoppelt sein.

Weiterhin ist erkennbar, dass die Blasform bei dieser Ausführungsform einseitig, d. h. hier an der rechten Seite in der Blasformschale 4 eingehängt ist. Zu diesem Zweck weist die Blasformschale 4 Vorsprünge 107 auf, welche in eine entsprechende Ausnehmung der Blasform 2a eingreifen. Auch bei dieser Ausführungsform kann zunächst die Blasform 2a in die Blasformschale 4 eingehängt und anschließend mit dem Eingriffselement 12 arretiert werden. Die Vorsprünge ragen dabei nicht aus der Ebene der Blasform heraus.

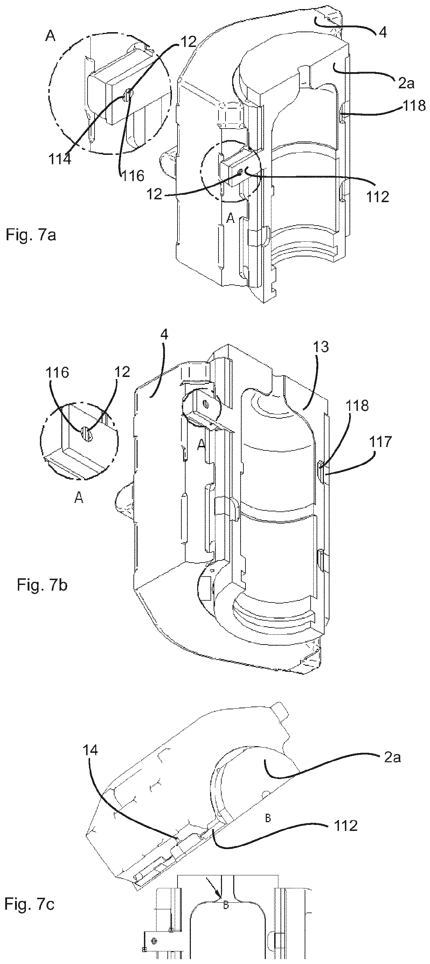

Die Figuren 7a - 7c zeigen eine weitere Ausführungsform der. Bei dieser Ausführungsform ist an der Blasform 2a ein sich in radialer Richtung erstreckender Vorsprung 112 angeordnet, der zum Arretieren der Blasform 2a an der Blasformschale 4 dient. In dem vergrößerten Bereich A der Darstellung ist wiederum ein Eingriffselement 12 vorgesehen, welches in einem arretierten Zustand in einer Ausnehmung 114 des Vorsprungs 112 angeordnet ist. Zum Lösen kann dieses Eingriffselement 12 um 90° gedreht werden, um auf diese Weise durch eine Ausnehmung 116 durchführbar zu sein, um so die Blasform 2a von der Formschale 4 zu lösen.

In Fig. 7b ist die Vorrichtung nach Fig. 7a in weiteren Perspektive gezeigt. Auch hier erkennt man wiederum das Eingriffselement in einem arretierten Zustand. Man erkennt weiterhin, dass die Blasform auch bei der in den Figuren 7a - 7b gezeigten Darstellung auf der rechten Seite eingehängt wird und die Arretierung lediglich auf der linken Seite stattfindet. Auf der rechten Seite der Blasform sind wiederum permanent vorhandene Vorsprünge 117 vorgesehen, die in eine entsprechende Ausnehmung 118 der Blasform eingreifen.

In den Figuren 7a - 7c ist die Arretierung einer Mutterform 13 in einer Blasformschale 9 dargestellt. Entsprechend wäre es jedoch auch möglich, eine Blasform an eine Mutterform oder auch eine Blasform an einer Blasformschale anzuordnen. Über den Vorsprung 112 kann ein verlängerter Hebelarm erreicht werden und auf diese Weise eine verstärkte Befestigung der beiden Elemente aneinander.

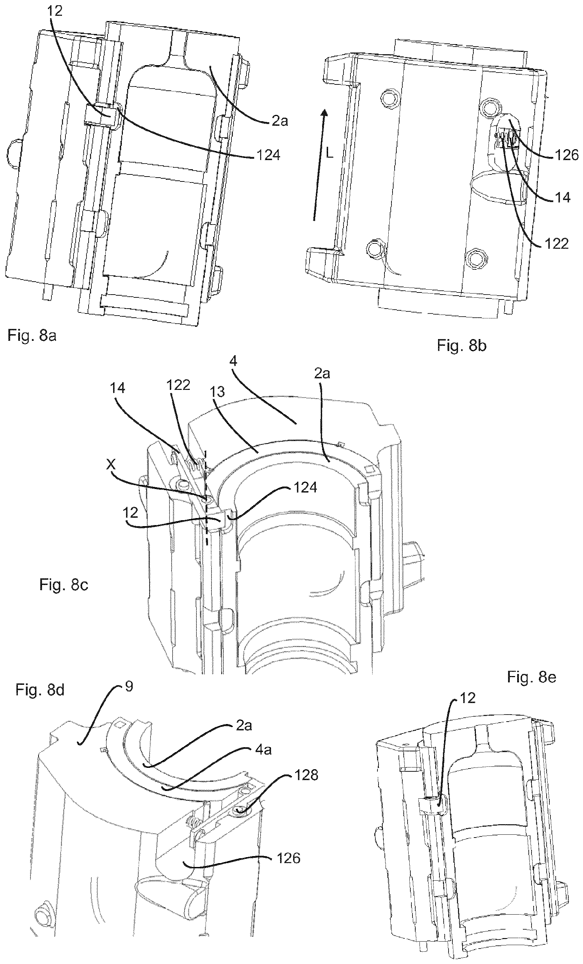

Die Figuren 8a - 8e zeigen eine weitere Ausführungsform, die hier jedoch die Anordnung insgesamt dreier Elemente aneinander ermöglicht. Zu diesem Zwecke ist hier genauer gesagt eine Blasform 2a über eine Mutterform 13 an einer Blasformschale 4 angeordnet. Weiterhin ist wieder ein Eingriffselement 12 vorgesehen, welches einerseits schwenkbar an der Blasformschale 4 angeordnet ist und andererseits in eine Ausnehmung 124 der Blasform 2a eingreift. Dieses Eingriffselement wird dabei mit einer Federungseinrichtung 122 so vorgespannt, dass es in die besagte Ausnehmung 124 eingreift. Auch dieses Eingriffselement weist wiederum ein manuell betätigbares Betätigungselement 14 (vgl. Fig. 8c) auf, wobei dieses Betätigungselement 14 wiederum in einer Ausnehmung 126 der Blasformschale 4 angeordnet ist. Das Bezugszeichen 128 kennzeichnet einen Anschlag, der die Bewegung des Verriegelungselements 14 begrenzt.

In der gleichen Weise könnte jedoch die Vorrichtung auch beispielsweise an einem Blasformträger angeordnet sein oder auch wäre es möglich, auf diese Weise lediglich zwei Elemente aneinander anzuordnen. Das Eingriffselement 12 kann dabei wiederum nicht gezeigte Schrägflächen aufweisen, welche die Blasformelemente 2 in Richtung des jeweiligen Trägerelements vorspannen.

Man erkennt, dass die Blasform 2a hier in der Längsrichtung L über die Mutterform bzw. Blasformschale hinaus steht. Diese Anordnung erleichtert ein Abnehmen der Blasform 2a von der Mutterform 13 bzw. der Blasformschale 4.

Man erkennt, dass auch das Eingriffselement hier nicht aus der jeweiligen Ausnehmung 124 herausragt. Daher ist hier auch in einem arretierten Zustand ein Schließen der gezeigten Blasformhälfte 2a mit einer entsprechenden Gegenhälfte 2b möglich. Dagegen kann in einem geschlossenen Zustand der gesamten Blasform das Eingriffselement 12 nicht über das Betätigungselement 14 betätigt werden.

Dabei ist bei der in den Figuren 8a - 8e gezeigten Ausführungsform das Eingriffselement 12 ebenfalls schwenkbar, genauer bezüglich einer Achse X schwenkbar.

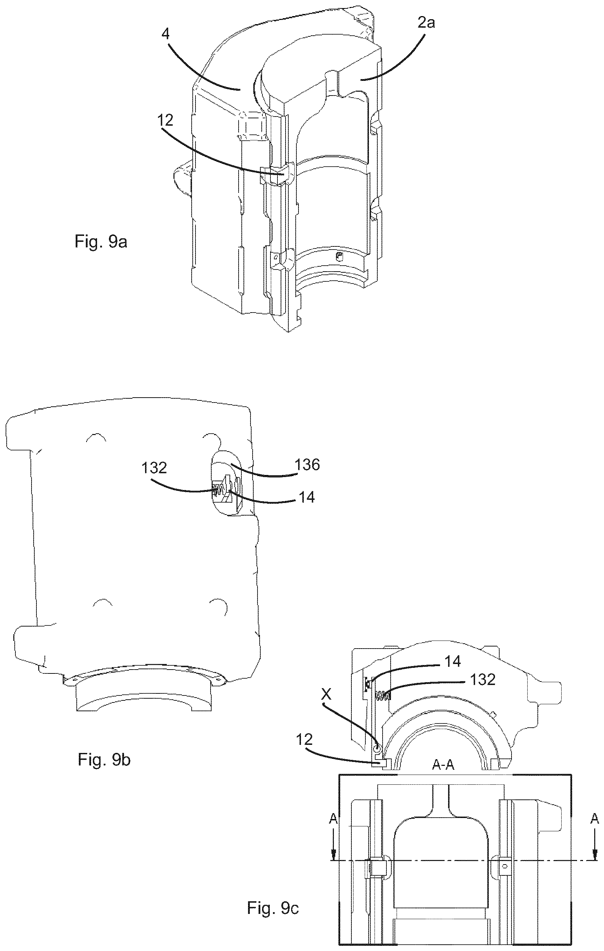

Die Figuren 9a - 9c zeigen eine weitere Ausführungsform der Vorrichtung. Diese Ausführungsform ist der in den Figuren 8a - 8e gezeigten Ausführung ähnlich, wobei hier der Anschlag 128 fehlt. Man erkennt, dass bei den in den Figuren 8 und 9 gezeigten Ausführungsformen das Eingriffselement um eine Achse geschwenkt wird, die parallel zu der Längsrichtung der Blasform verläuft, dabei jedoch das Eingriffselement primär in einer radialen Richtung in die entsprechende Ausnehmung der Blasform 2a eingreift.

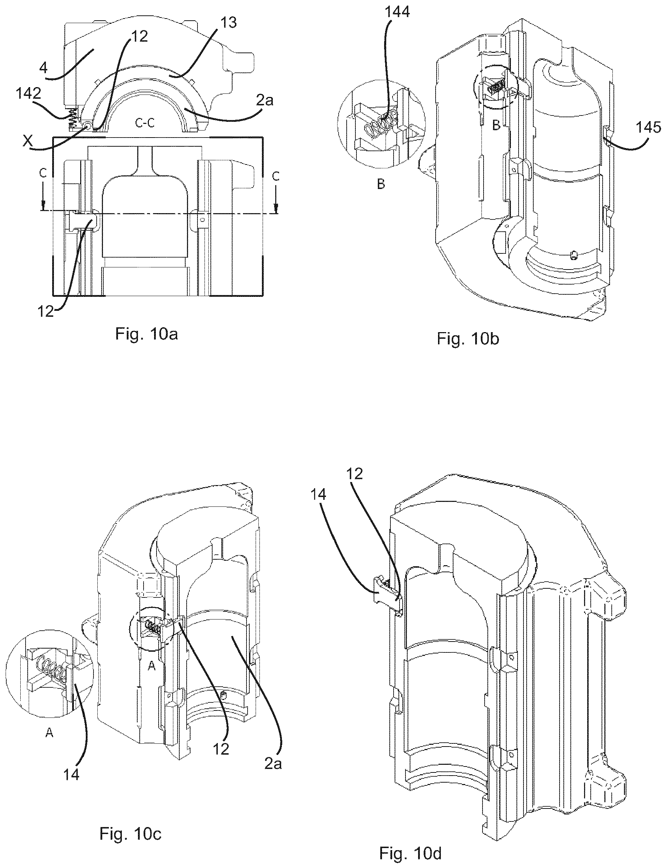

Die Figuren 10a - 10d zeigen eine weitere Ausführungsform der Vorrichtung. Bei dieser Ausführungsform ist ebenfalls ein Eingriffselement 12 vorgesehen, welches schwenkbar um eine in Fig. 10a senkrecht zur Figurenachse verlaufende Schwenkachse X angeordnet ist, wobei auch hier ein Federungselement 142 vorgesehen ist, welches das Eingriffselement 12 derart vorspannt, dass die Blasform 2a an der Blasformschale 4 angeordnet ist. Dabei ist bei dieser Ausführungsform diese Schwenkachse fest bezüglich der Formschale 4 oder auch der Mutterform 13 angeordnet, wobei auch diese Mutterform 13 fest gegenüber der Formschale 4 angeordnet sein kann. Bei der in den Figuren 10a - 10d gezeigten Ausführungsform wird das Eingriffselement ebenfalls geschwenkt, dabei jedoch ein Endabschnitt des Eingriffselements gegenüber der Blasform im Wesentlichen tangential bewegt. Der Benutzer kann hier auf das Betätigungselement 14 drücken, um auf diese Weise die Blasform 2a von ihrer Mutterform bzw. von der Formschale zu lösen. Die Blasform 2a weist hier wiederum Ausnehmungen 145 auf, in welches das Eingriffselement 12 oder auch stationär angeordnete Eingriffselemente (insbesondere auf der gegenüberliegenden Seite bezüglich der Blasform) eingreifen können.

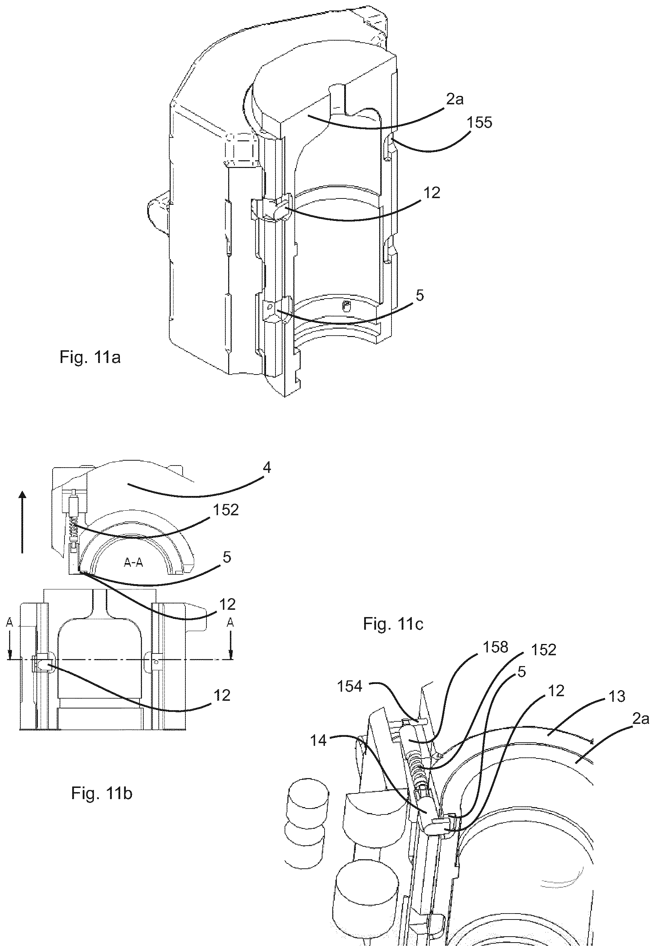

Die Figuren 11a - 11c zeigen eine weitere Ausführungsform.

Diese Ausführungsform ist mit der in den Figuren 10a - 10c gezeigten Ausführungsform vergleichbar, wobei hier jedoch die Bewegung des Eingriffselements 12 nicht eine Schwenkbewegung ist, sondern eine Verschiebebewegung in einer Richtung T, welche tangential zu der Blasform 2a verläuft. Dabei ist hier auch ein Betätigungselement 14 vorgesehen, welches bei dieser Ausführungsform einteilig mit dem Eingriffselement 12 ausgeführt ist.

Manuell kann dieses Betätigungselement 14 gezogen werden, um ausgehend von Fig. 11c die Blasform zu lösen. Das Arretierungsmittel, der Arretierungsmechanismus ist hier an einem Bolzen 154 eingehängt und ein Federungselement 152 zieht das Eingriffselement 12 in der Richtung T und befestigt damit das Blasformelement 2a an dessen Mutterform 13 sowie der Blasformschale 4. Auch bei dieser Ausführungsform könnten in Längsrichtung mehrerer dieser Eingriffselemente 12 vorgesehen sein. Auf der rechten Seite könnten die besagten Eingriffselemente vorgesehen sein, es wäre jedoch auch möglich, dass auch hier die Blasform lediglich eingehängt wird und auf diese Weise permanente Vorsprünge in die jeweiligen Ausnehmungen 155 der Blasform 2a eingreifen. Das Bezugszeichen 158 kennzeichnet einen Regulierkörper, um die auf das Eingriffselement wirkende Federkraft einzustellen.

Weiterhin wäre es bei dieser Ausführungsform auch möglich, dass das Eingriffselement 12 durch pneumatische Mittel betätigt wird, wobei auf diese Weise sowohl ein Lösen als auch ein Arretieren des Blasformelements 2a möglich ist.

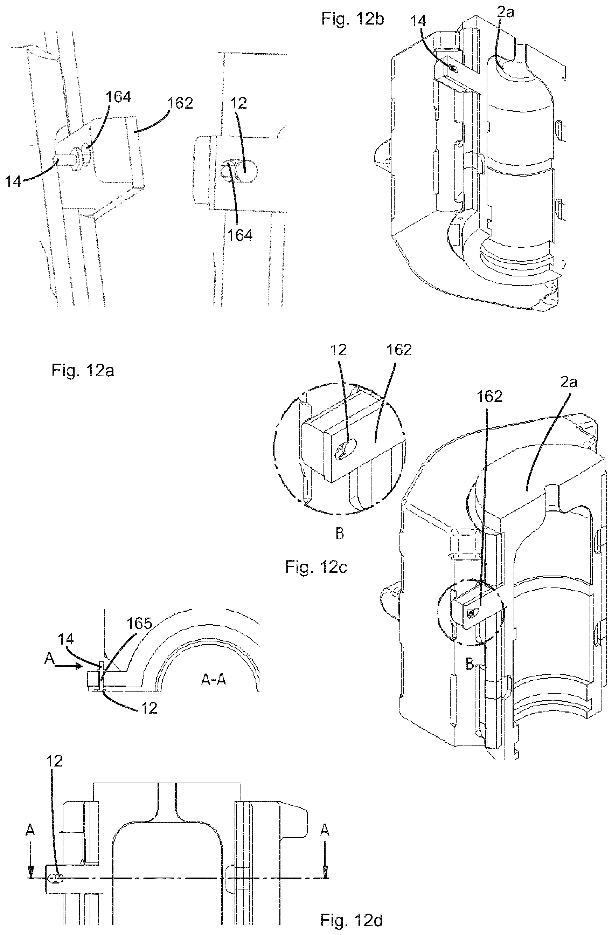

Die Figuren 12a - 12d zeigen eine weitere Ausführungsform der erfindungsgemäßen Vorrichtung. Bei dieser Ausführungsform ist, wie bei der in den Figuren 7a - 7c gezeigten Ausführungsform ein Vorsprung 162 vorgesehen, der zur Arretierung der Blasform 2a dient.

Im Unterschied zu der in den Figuren 7a - 7c gezeigten Ausführungsform ist hier jedoch das Eingriffselement 12 als runder Kopf ausgestaltet, der gegenüber einer Ausnehmung bzw. einem Loch 164 in den Vorsprung 162 bewegbar ist. Durch diese Bewegung kann, wie in Fig. 12a gezeigt, eine Arretierung des Blasformelements vorgenommen werden. So wäre es beispielsweise möglich, dass das Eingriffselement 12 gemeinsam mit dem Betätigungselement 14 in eine Richtung A (vgl. Fig. 12d) verschoben wird, um auf diese Weise eine Arretierung zu erreichen. Eine entsprechende Ausnehmung 164 weist zumindest in einer Erstreckungsrichtung (A) eine größere Ausdehnung aus als ein Bolzen 165, der das Eingriffselement 12 mit dem Betätigungselement 14 verbindet. Genauer gesagt ist hier bevorzugt das Eingriffselement 12 über den Bolzen 165 mit dem Betätigungselement 14 einteilig verbunden.

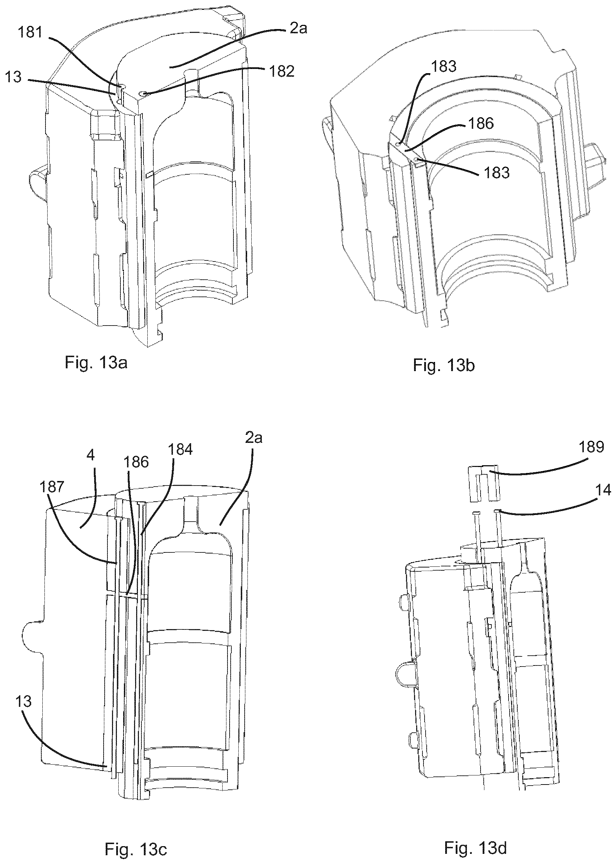

Die Figuren 13a - 13d zeigen eine weitere Ausführungsform für eine Verriegelung. Bei dieser Ausführungsform ist, wie am besten in Fig. 13c erkennbar, in dem Blasformelement 2a eine in der Längsrichtung L verlaufende Bohrung vorgesehen, durch welche ein Stangenkörper 184 eingeschoben werden kann. Gleichzeitig ist an der Blasformschale 4 ein sich horizontal erstreckender Vorsprung 186 vorgesehen, der wiederum durch eine Ausnehmung verläuft, welches sowohl in der Blasform 2a als auch in der Mutterform 13 vorgesehen ist.

Dieser Vorsprung 186 weist ein Loch bzw. eine Öffnung 183 auf, durch welche sich die Stange 184 in einem geschlossenen Zustand hindurch erstreckt. Das Bezugszeichen 187 bezieht sich auf einen weiteren stangenförmigen und sich in der Längsrichtung L erstreckenden Körper, der hier in der Mutterform 13 angeordnet ist und zu deren Arretierung dient.

Wie in Fig. 13d erkennbar, können die beiden Stangen 184 und 187 in der Längsrichtung L durch einen Magneten 189 abgezogen werden, um die Blasform 2a zu lösen. Fig. 13d zeigt einen Schnitt auf der Höhe eines Vorsprungs 186, wobei auch hier die beiden Öffnungen bzw. Löcher 183 zum Durchführen der beiden Stangen 184 und 187 deutlich zu erkennen sind. Man erkennt weiterhin, dass die Öffnung für die Stange 187 teilweise durch die Blasform 2a gebildet wird und teilweise durch die Mutterform 13. Damit ist es möglich, dass auch bereits durch eine Stange 187, die in diese Öffnung 181 eingeschoben wird, welche teilweise durch die Blasform 2a und teilweise durch die Mutterform 13 gebildet wird, eine Arretierung der Blasform 2a an der Mutterform 13 erfolgt.

Es wären hier jedoch auch andere Methoden denkbar, um die stangenförmigen Körper innerhalb der Vorrichtung zu arretieren. So könnten diese Stangen 184 und 187 an ihrem jeweils unteren Ende ein Gewinde aufweisen, in dem sie in ein entsprechendes Gegengewinde der Blasform eingeschraubt werden. In diesem Falle stellt jedoch die Stange 184 das Eingriffselement dar und ein oberer Bereich, der hier von einem Magneten 189 angezogen werden kann, ein Betätigungselement mit welchen das Eingriffselement einseitig ausgebildet ist. Zum Lösen erfolgt hier jedoch keine Schwenkbewegung, sondern eine Bewegung entlang des Pfeils L, der hier gleichzeitig die Längsrichtung der Vorrichtung markiert. Die Stangen 187 und 184 können also jeweils für sich genommen die erfindungsgemäßen Eingriffselemente 12 darstellen und der Kopf dieser Stangen jeweils das Betätigungselement 14.

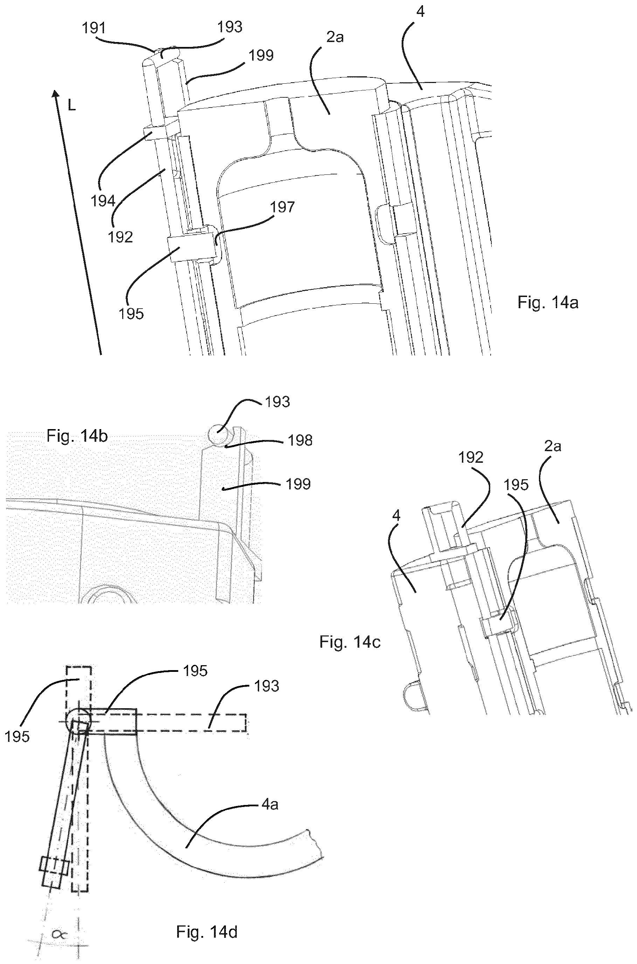

Die Fig. 14a - 14d zeigen eine weitere Ausführungsform einer Verriegelung. Auch bei dieser Ausführungsform ist ein Eingriffselement 195 vorgesehen, welches in eine Ausnehmung 197 in der Blasform 2a eingreift, um die Blasform 2a gegenüber der Blasformschale 4 zu befestigen.

Dieses Eingriffselement 195 ist hier drehfest an einer Stange 192 angeordnet, welche um die Längsrichtung L schwenkbar ist. Zu diesem Zweck ist an der Stange 192 ein Hebel 193 angeordnet. Das Bezugszeichen 191 kennzeichnet einen an der Blasformschale 4 angeordneten Anschlag, der eine Schwenkbewegung der Stange 192 begrenzt. Bei dieser Ausführungsform ist keine separate Feder zum Spannen der Blasform 4a vorgesehen.

Eine gewisse Federungswirkung wird hier durch die Stange 192 bewirkt, welche um ihre Erstreckungsrichtung verdrillt werden kann. Zu diesem Zweck rastet bevorzugt der Hebel in einer Stellung gegenüber einem Träger 199 ein, der ein gewisses Vorspannen des Eingriffselements 195 bewirkt. Dieser Sachverhalt ist in Fig. 14d veranschaulicht. Hier sind zwei Stellungen der Stange 192 gezeigt, nämlich einerseits eine Verriegelungsstellung (durchgezogene Linien) sowie eine gelöste Stellung (gestrichelte Linien). Der Winkel α kennzeichnet den Winkel, um den die Stange zwischen dem Hebel 193 und dem Eingriffselement 195 verdrillt ist, so dass die Blasform 2a zuverlässig eingespannt wird.

Das Bezugszeichen 194 bezieht sich auf eine Lagerung zum Lagern der Stange 192. Vorzugsweise ist noch wenigstens eine weitere derartige Lagerung (nicht gezeigt) vorgesehen. Dabei könnte diese Lagerung auch derart ausgestaltet sein, dass sich die Stange nicht in ihrer Längsrichtung gegenüber der Lagerung 194 verschieben kann.

Es wäre auch möglich, in der Lagerung 194 ein Innengewinde vorzusehen, welches mit einem entsprechenden Aussengwinde in der Stange 192 zusammenwirkt. In diesem Fall könnte ein (nicht gezeigter) Hubzylinder, wie beispielsweise ein Pneumatikzylinder vorgesehen sein, der die Stange 192 in der Längsrichtung verschiebt und auf diese Weise auch ein Schwenken derselben bewirkt. In diesem Fall wäre bevorzugt die Stange 192 drehbar gegenüber dem genannten Pneumatikzylinder. Bei dem besagten Gewinde der Lagerung 194 könnte es sich bevorzugt um ein Steilgewinde handeln.

Bei der in Fig. 14b gezeigten Darstellung erkennt man zusätzlich eine Ausnehmung 198, in welche die Stange 192 einrasten kann.

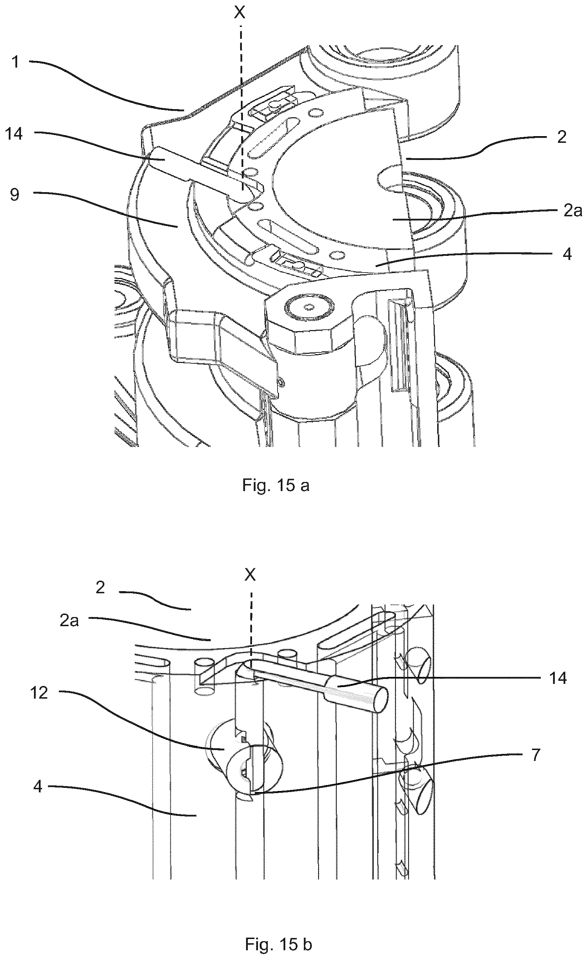

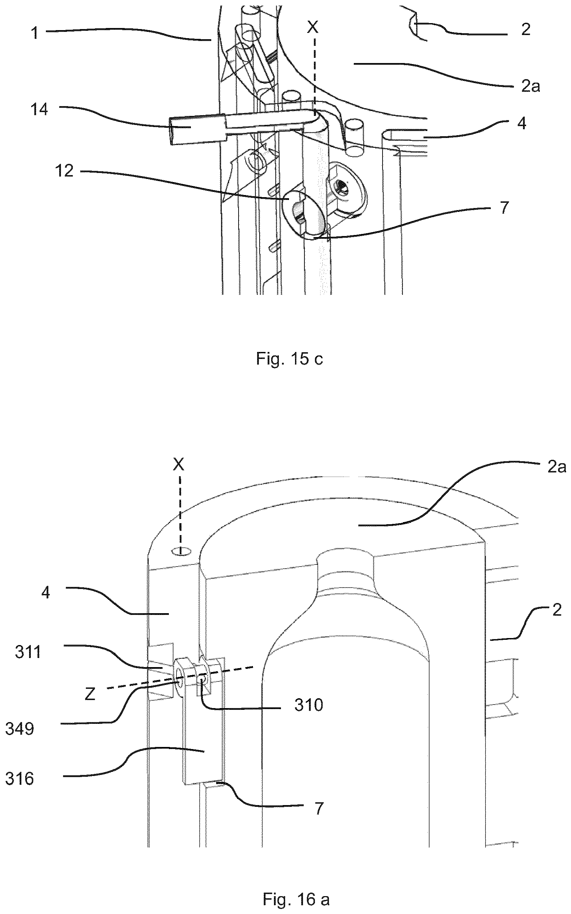

Fig. 15 a zeigt eine weitere Ausführungsform der Blasformanordnung 1, bei der die Blasform 2 ohne die Verwendung eines zusätzlichen Werkzeuges wechselbar ist.

Beide Blasformhälften 2a lassen sich jeweils mittels eines manuellen Betätigungselementes 14, welches von einer Öffnungs-Position, wie in Fig. 15b gezeigt, zu einer Schließ-Position, wie in Fig. 15c gezeigt, um die Achse X schwenkbar angeordnet ist und einen stangenförmigen Körper mit einem exzentrischen Querschnittsprofil bzw. eine exzentrische Ausnehmung 7 aufweist, entriegeln.

Dabei ist die Blasform 2 mit einem oder mehreren bolzenförmigen Eingriffselementen 12 ausgestattet, welche radial abstehend an der zylindrischen Außenwand der Blasform 2 angebracht sind. Jedes dieser Eingriffselemente 12 greift jeweils radial in eine zylindrische Bohrung der Blasformschale 4 ein und verhindert dadurch eine Verdrehung der Blasform 2. Mittels des Betätigungselementes 14, welches um die Achse X dreh- bzw. schwenkbar in einer Bohrung der Blasformschale 4 eingebracht ist und das Eingriffselement 12 durchdringt, kann bei einer Schwenkung des Betätigungselementes 14 um die Achse X die Blasform 2 in der Blasformschale 4 aufgrund der Exzentrizität in der Ausnehmung 7 eingespannt bzw. arretiert werden. Dabei ist eine Form-Entriegelung auch bei einem geschlossenen Formträger 9 möglich und es können mehrere Eingriffselemente 12 pro Blasformhälfte 2a angebracht sein (in Richtung der Achse X hintereinander), welche jeweils mit nur einem einzigen Betätigungselement 14 einspannbar bzw. arretierbar sind.

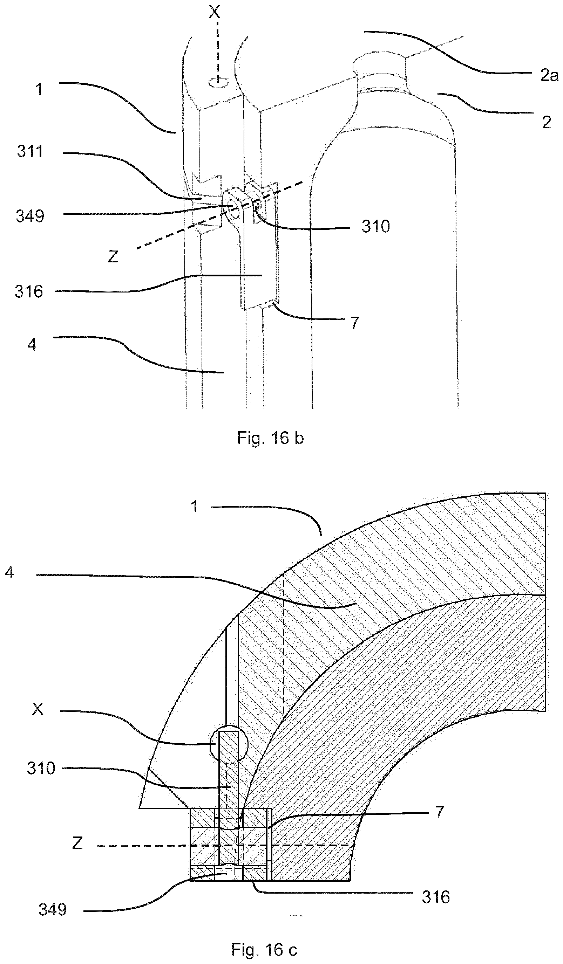

Die Fig. 16a zeigt eine weitere Ausführungsform der Blasformanordnung 1 bei der jede Blasformschale 2a ohne die Verwendung eines zusätzlichen Werkzeuges mittels eines Exzenter-Schnellspannelements 316 auswechselbar ist. Fig. 16b zeigt eine weitere perspektivische Ansicht dieser Blasformanordnung 1. Das Exzenter-Schnellspannelement 316 ist in einer Ausnehmung 7 der Blasform 2 bzw. der Blasformhälfte 2a versenkt angeordnet, so dass eine zweite Blasformhälfte 2a bündig angelegt und die gesamte Blasformanordnung 1 geschlossen werden kann.

Fig. 16c zeigt, dass zur mechanischen Arretierung der Blasformhälfte 2a gegenüber der Blasformschale 4 das Exzenter-Schnellspannelement 316 mit einem Bolzen 349 und einer Zugstange 310 versehen ist, welche mit einer Achse bzw. Welle X der Blasformschale 4 schwenkbar verbunden ist.

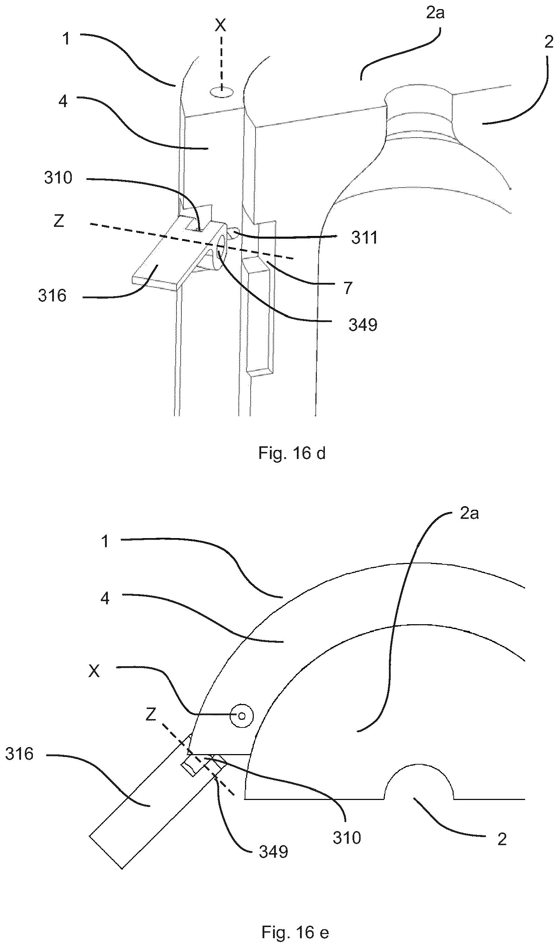

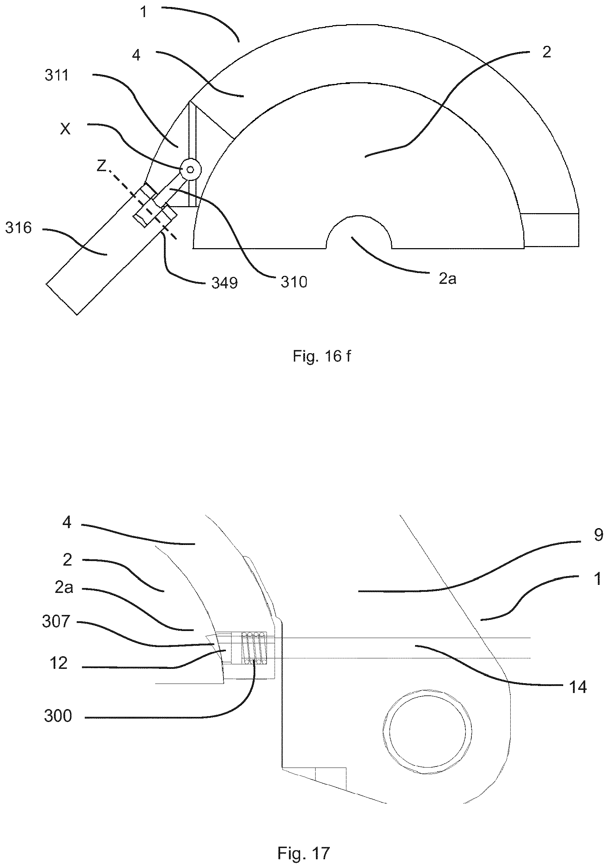

Das Exzenter-Schnellspannelement 316 ist beweglich um die Achse Z ausgeführt und kann zur Demontage bzw. zur Entriegelung der Blasform von einer senkrechten Schließ- zu einer horizontalen Öffnungs-Position um die Achse Z hochgeklappt werden (Fig. 16d). Damit die Blasform zum Auswechseln freigegeben werden kann, lässt sich das Exzenter-Schnellspannelement 316, wie in Fig. 16e gezeigt, um eine Achse X schwenken. Hierzu ist die Blasformhälfte 2a mit einer horizontalen Ausfräsung 311 versehen. Fig. 16 f. zeigt in einem Horizontalschnitt durch die Ausfräsung 311 die Anordnung der Zugstange 310, welche mittels des Bolzens 349 an der Achse Z des Exzenter-Schnellspannelements 316 sowie mit der Achse X in der Blasformschale 4 verbunden ist.

Die Fig. 17 zeigt eine weitere Ausführungsform der Blasformanordnung 1 bei der die Blasform 2 ohne die Verwendung eines zusätzlichen Werkzeuges wechselbar ist, wobei das Bezugszeichen 9 den Formträger zeigt. Die Blasform 2 ist gegenüber der Blasformschale 4 gegen eine Verdrehung bzw. eine Verschiebung um die Hochachse mittels eines Eingriffselementes 12 gesichert bzw. arretiert. Dieses greift mittels eines Federelements 300 selbsttätig in eine Ausnehmung 307 der Blasform 2 ein. Bei der Montage der Form wird die Form zuerst in die Formschale eingedrückt, wobei das Eingriffselement 12 dabei gegen die Rückstellkraft des Federelementes zurück gedrängt wird. Sobald die Blasform 2 korrekt in der Blasformschale 4 ausgerichtet ist, kann das Eingriffselement 12 anschließend durch die Federkraft in die Ausnehmung 307 eingreifen und die Blasform 2 gegen eine Verdrehung bzw. eine Verschiebung gegenüber der Blasformschale 4 arretieren. Das Eingriffselement 12 kann mittels eines manuellen Betätigungselementes 14 zurückgezogen werden, so dass ein Lösen der Blasform 2 von der Blasformschale 4 möglich ist. Ebenso denkbar ist es, dass das Eingriffselement mit der Rückstellfeder in der Blasform positioniert ist und auf der Gegenseite eine Ausnehmung gebildet ist, dessen Anlegefläche wegschaltbar ist ähnlich dem eines elektrischen Türöffners (Variante nicht gezeigt).

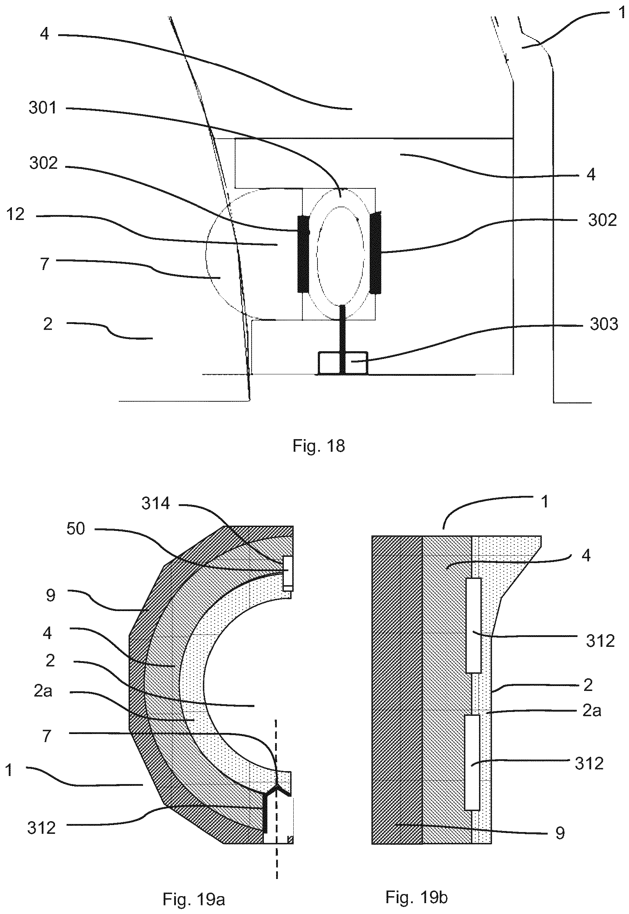

Fig. 18 zeigt eine weitere Ausführungsform der Blasformanordnung 1 bei der die Blasform 2 ohne die Verwendung eines zusätzlichen Werkzeuges wechselbar ist. Die Blasform 2 wird hier ebenfalls mittels eines Eingriffselementes 12 gegen eine Verdrehung um die Hochachse bzw. eine Verschiebung arretiert bzw. gesichert. Das Eingriffselement 12 greift in eine Ausnehmung 7 an der zylindrischen Außenwand der Blasform 2 ein und wird durch ein Druckelement 301, wie z. B. einen Druckschlauch oder einen Druckzylinder, angetrieben bzw. betätigt.

Das Druckelement 301 wird über ein Ventil 303, welches wahlweise geöffnet oder geschlossen werden kann, mit Druckluft versorgt. Zum Wechsel der Blasform 2 kann der Druck in dem Druckelement 301 mittels des Ventils 303 abgebaut werden, so dass das Eingriffselement 12 gegenüber der Blasformschale 4 druckentlastet wird und die Blasform 2 somit entnommen werden kann. Um eine vollständige Rückstellung des Eingriffselementes 12 zu ermöglichen, kann das Druckelement 301 mit dem Eingriffselement 12 mechanisch, wie z.B. durch eine Verklebung 302, verbunden sein, so dass das Druckelement 301 bei einer Druckentlastung das Eingriffselement 12 selbsttätig oder mittels eines Unterdrucks aus der Ausnehmung 7 in der Blasformschale 4 zurückstellen kann.

In einer alternativen Ausführungsform kann die Blasformanordnung 1 mit einem Federelement ausgestattet sein, welches dazu dient, das Eingriffselement 12 selbsttätig und dauerhaft durch Federkraft in die Ausnehmung 7 der Blasform 2 zu drücken und gegenüber der Blasformschale 4 zu arretieren. Zum Öffnen kann durch einen Druck- oder durch einen Unterdruckaufbau in dem Druckelement 301 das Eingriffselement 12 aus der Ausnehmung 7 der Blasform 2 gegen die Federkraft des Federelements gedrückt werden, um die Verriegelung bzw. die Arretierung zu lösen.

In Fig. 19a wird eine weitere Ausführungsform der Blasformanordnung 1 in einem Formträger 9 gezeigt, bei der die Blasformschale 4 einseitig mit einem Eingriffskörper 50, welcher entlang der Hochachse in die Blasformschale 4 in einer Ausnehmung 314 eingebracht ist, versehen ist. Der Eingriffskörper 50 greift in der Blasformhälfte 2a einseitig ein und fixiert diese hierdurch. Bei der Montage wird die Blasform 2 bzw. die Blasformhälfte 2a in die Blasformschale 4 an dem Eingriffskörper 50 einseitig angelegt und in die Blasformschale 4 eingedreht. Zur Arretierung der Blasform 2 ist die Blasformschale 4 mit einem federnden Eingriffselement 312, welches hier als Federblech ausgebildet ist, und die Blasform 2 mit einer Ausnehmung 7, in welche das federnde Eingriffselement 312 eingreifen kann, ausgestattet.

Fig. 19b zeigt den Radialschnitt durch das federnde Eingriffselement 312, welches entlang der Hochachse der erfindungsgemäßen Blasformanordnung 1 zwischen der Blasform 2 bzw. den Blasformhälften 2a und der Blasformschale 4 angeordnet ist. Zum Lösen der Arretierung wird ein Werkzeug benötigt, damit die Blasformhälfte 2a aus dem Federblech bzw. aus dem federnden Eingriffselement 312 gelöst und aus der Blasformschale 4 herausgezogen werden kann. Es wäre jedoch auch möglich, dass ein derartiges Werkzeug - ggfs. auch einteilig - an dem Eingriffselement 312 angeordnet ist.

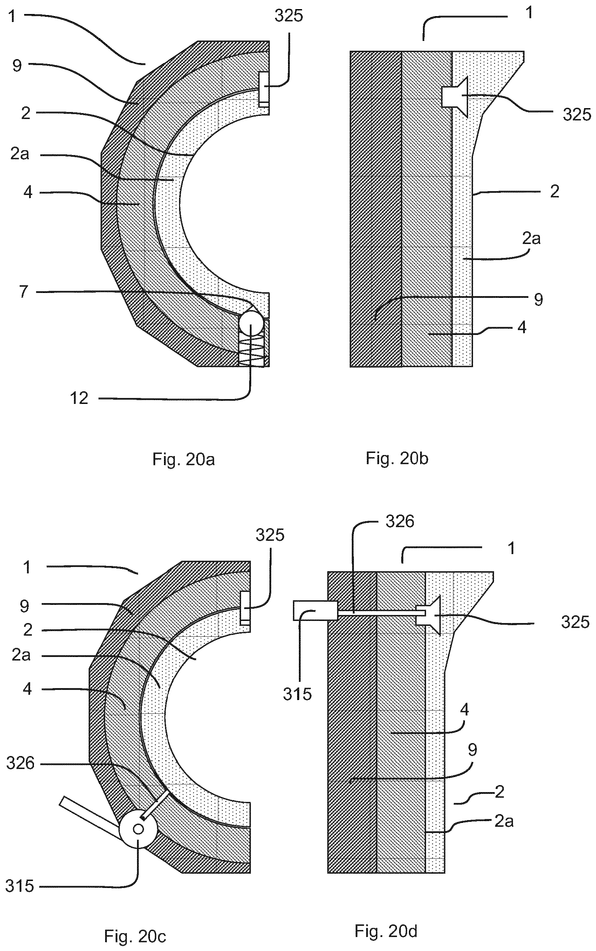

Fig. 20a zeigt eine weitere Ausführungsform der Blasformanordnung 1 in einem Formträger 9 bei der die Blasform 2 ohne die Verwendung eines zusätzlichen Werkzeuges wechselbar ist und bei der die Blasform 2 bzw. die Blasformhälfte 2a einseitig mittels eines Federnutelementes 325 in der Blasformschale 4 geführt wird. Fig. 20b zeigt den Radialschnitt durch das Federnutelement 325, welches zwischen der Blasform 2 bzw. den Blasformhälften 2a und der Blasformschale 4 angeordnet ist. Das Federnutelement 325 sichert die Blasform 2 gegenüber radialen und axialen Kräften. Zur Sicherung gegenüber einer tangentialen Verdrehung ist die Blasformschale 4 mit einem federnden Eingriffselement 12, welches hier als Kugelfeder ausgebildet ist und in eine Ausnehmung 7 der Blasform 2 eingreift, ausgestattet. Fig. 20c zeigt in einer alternativen Ausführungsform ein hebelförmiges Betätigungselement 315, welches die Blasform 2 in die Blasformschale 4 bzw. in den Formträger 9 über einen Stößel 326 und welches z.B. an dem Formträger 9 angebracht ist, presst. In einer weiteren Ausführungsform kann das hebelförmige Betätigungselement 315 mit dem Federnutelement 325 über einen Stößel 326 mechanisch verbunden sein, so dass das hebelförmige Betätigungselement 315 bei einer Betätigung, d.h. durch Druck- oder Zugkraft, in die Blasform 2 bzw. in den Formträger 9 gepresst wird. Dabei kann das hebelförmige Betätigungselement 315 verschiedenförmig ausgebildet sein und beispielsweise mit Rastelementen zur stufenweisen Arretierung versehen sein und/oder ein exzentrisches Element aufweisen, so dass die Zug- oder Druckkräfte auf den Stößel 326 bzw. auf die Blasform 2 verstärkt werden können (Fig. 20d).

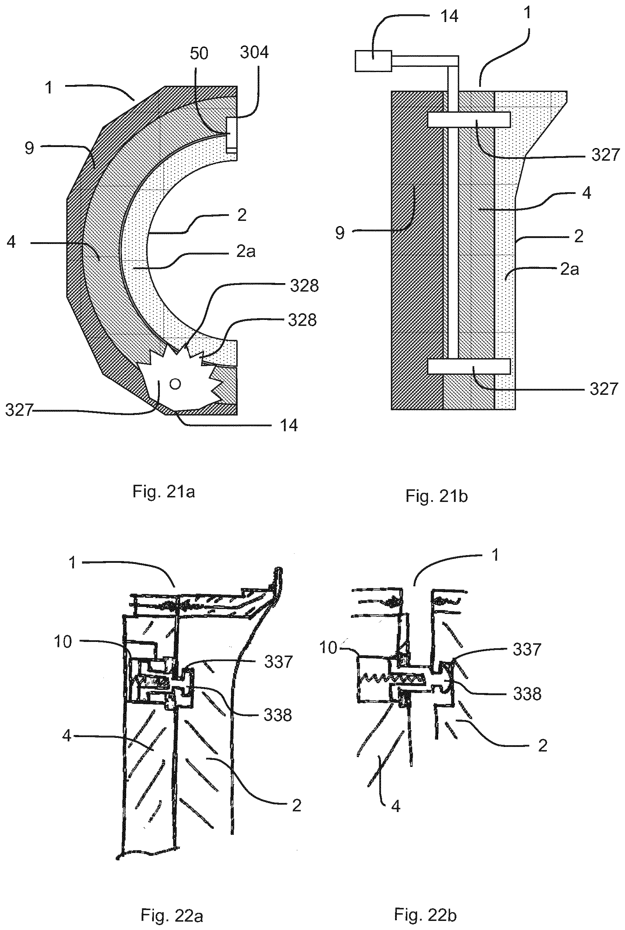

Fig. 21a zeigt eine weitere Ausführungsform der Blasformanordnung 1 in einem Formträger 9 bei der die Blasform 2 ohne die Verwendung eines zusätzlichen Werkzeuges wechselbar ist. Die Blasformschale 4 ist einseitig mit einem Eingriffskörper 50, welcher entlang der Hochachse in die Blasformschale 4 in einer Ausnehmung 304 eingebracht ist, versehen. Der Eingriffskörper 50 greift in der Blasformhälfte 2a einseitig ein und fixiert diese hierdurch. Bei der Montage wird die Blasform 2 bzw. die Blasformhälfte 2a in die Blasformschale 4 an dem Eingriffskörper 50 einseitig angelegt und in die Blasformschale 4 eingedreht. Zur Arretierung wird die Blasform 2 mit einem zahnradförmigen Eingriffselement 327 in die Blasformschale 4 bzw. in den Formträger 9 gepresst. Hierzu kann die Blasform 2 an der zylinderförmigen Außenfläche mit mehreren zahnförmigen Ausnehmungen 328 versehen sein, in die das zahnradförmige Eingriffselement 327 eingreifen kann. Das zahnradförmige Eingriffselement 327 kann verschiedene Ausführungsformen besitzen, so z. B. die Form eines Zahnrades mit mehreren Verzahnungen, oder mit nur einer Verzahnung. Wie in Fig. 21b gezeigt, kann die Betätigung des zahnradförmigen Eingriffselement 327 mittels eines Betätigungselementes 14 erfolgen, welches über die Hochachse aus der Blasformanordnung 1 herausgeführt ist. Es können mehrere zahnradförmige Eingriffselemente 327 sowie zahnförmigen Ausnehmungen 328 pro Blasformhälfte 2a angebracht sein, welche jeweils mit nur einem einzigen Betätigungselement 14 betätig- bzw. arretierbar sind.

Fig. 22a zeigt eine weitere Ausführungsform der Blasformanordnung 1 bei der die Blasform 2 ohne die Verwendung eines zusätzlichen Werkzeuges wechselbar ist und bei der die Blasform 2 an ihrer zylinderförmigen Außenwand mit einer hakenförmigen Ausnehmung 337 versehen ist, in welche die Blasform 2 bei der Montage eingehängt werden kann. Die Blasformschale 4 ist mit einem entsprechenden Verriegelungsmechanismus 10 und mit einem hakenförmigen Eingriffselement 338 ausgestattet, welches entweder mechanisch, pneumatisch, hydraulisch oder elektromagnetisch betätigt bzw. zurückgezogen wird, so dass die Blasform 2 an die Blasformschale 4 gepresst und damit, wie in Fig. 22b gezeigt, arretiert werden kann.

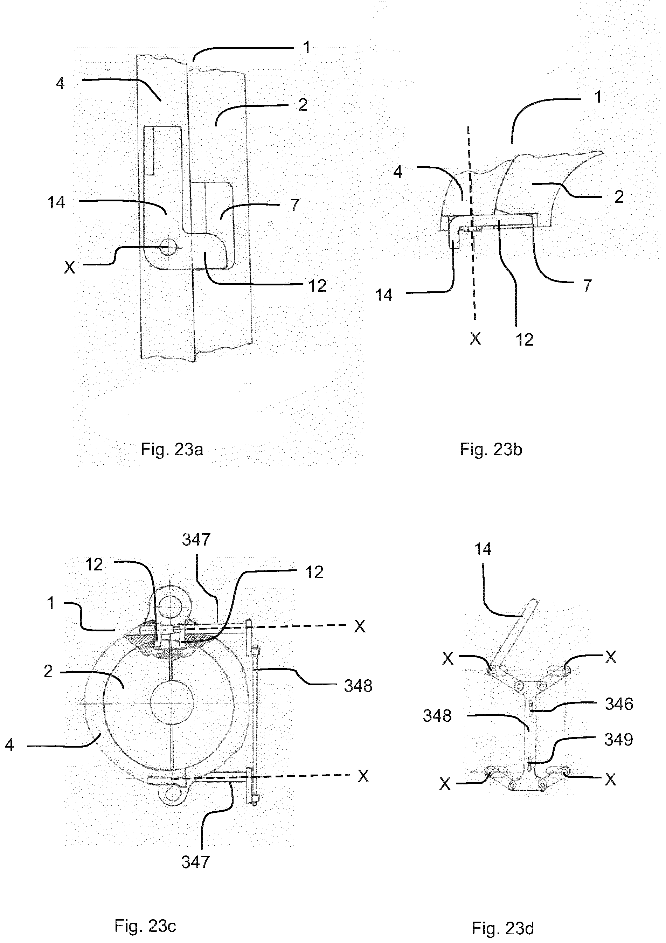

Die Fig. 23a zeigt eine weitere Ausführungsform einer Blasformanordnung 1 bei der die Blasform 2 ohne die Verwendung eines zusätzlichen Werkzeuges wechselbar ist. Die Blasform 2 ist mit einer Ausnehmung 7 versehen, in welche ein Eingriffselement 12 eingreifen kann, so dass die Blasform 2 gegenüber der Blasformschale 4 gegen ein Verdrehen und/oder Verschieben um bzw. entlang der Hochachse arretiert ist. Das Eingriffselement 12 ist um eine Achse X drehbar angeordnet und ist mit einem hebelförmigen Betätigungselement 14 versehen.

Fig. 23b zeigt einen Horizontalschnitt durch die Blasformanordnung 1 der Fig. 23a bei dem das Eingriffselement 12 die Blasform 2 gegenüber der Blasformschale 4 arretiert. Die Fig. 23c zeigt weitere Ausführungsformen der erfindungsgemäßen Blasformanordnung 1. Dabei ist die Blasformschale 4 mit insgesamt vier Eingriffselementen 12 und die Blasform 2 mit vier Ausnehmungen 7 entlang der Hochachse ausgestattet, wobei sich jeweils zwei Eingriffselemente 12 sowie zwei Ausnehmungen 7 horizontal gegenüber liegen.

Die Achsen X der Eingriffselemente 12 sind mittels Drehachsenelementen 347 tangential an der zylinderförmigen Außenwand der Blasformschale 4 nach außen geführt und mechanisch mittels eines Verbindungselementes 348 (Fig. 23d) miteinander gekoppelt, so dass bei einer Schwenkung eines Betätigungselementes 14 alle vier Eingriffselemente 12 gleichzeitig um ihre jeweilige Drehachse X gedreht und damit die Blasform 2 arretiert oder freigegeben werden kann. Das Verbindungselement 348 ist entlang der Längsachse beweglich und weist Ausnehmungen 346 auf, in welche Bolzen 349 eingreifen.

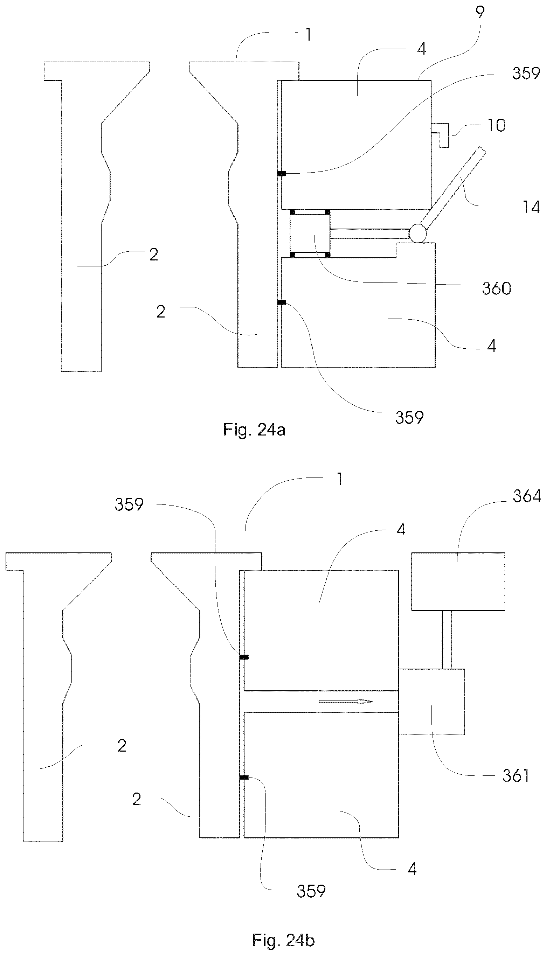

In Fig. 24a wird eine weitere Ausführungsform der Blasformanordnung 1 gezeigt bei der die Blasform 2 ohne die Verwendung eines zusätzlichen Werkzeuges wechselbar ist und bei der die Blasform 2 gegenüber der Blasformschale 4 mittels eines Unterdrucks arretiert wird. Hierzu ist die Blasformanordnung 1 mit Dichtungselementen 359 an der Verbindungsfläche zwischen der Blasform 2 und der Blasformschale 4 sowie mit einem Unterdruckzylinder 360 versehen. Der Unterdruckzylinder 360 ist mit einem Betätigungselement 14 versehen, wodurch dieser zurückgezogen und ein Unterdruck hergestellt werden kann. Das Betätigungselement 14 ist mit einem Verriegelungsmechanismus 10 versehen, wodurch dieses arretiert werden kann und an den Formträger 9 befestigt werden kann. Die Dichtungselemente 359 können dabei elastisch, etwa in der Art von Gummiringen ausgeführt sein. Auch kann der Unterdruckzylinder 360 mittels Dichtmitten gegenüber einem Kanal, in dem er beweglich ist, abgedichtet sein.

Weiterhin ist es vorteilhaft vorgesehen in der Blasformanordnung 1 ein Zentrierhilfsmittel (nicht gezeigt) anzubringen, um die Blasform 2 oder ein Blasformteil 2a, 2b während des Arretierens bzw. während der Herstellung des Unterdrucks und des damit verbundenen Ansaugens der Blasformaußenfläche an die Blasformschale 4 bzw. an die Dichtungselemente 359 in einer beabsichtigten Arbeitsendposition selbsttätig zu dem Blasformhalter hin auszurichten.

Hierzu kann eine konische Erhebung sowie eine korrespondierende konische Ausnehmung, welche zum Beispiel entweder an der Außenseite der Blasform 2 oder an der Innenseite des Blasformhalters 4 zum Beispiel im Dichtungsbereich zwischen den Dichtungselementen 359 angeordnet ist, vorgesehen sein.

Es wird darauf hingewiesen, dass das hier beschriebene Zentrierhilfsmittel auch in Verbindung mit den anderen gezeigten Ausführungsformen verwendet werden kann.

Fig. 24b zeigt eine weitere Ausführungsform der Blasformanordnung 1.

Die Bereitstellung des Unterdrucks erfolgt hier durch ein Venturi-Ventil 361, welches mit Druckluft durchströmt wird, so dass ein Unterdruck erzeugt wird. Dabei erfolgt die Bereitstellung des Überdrucks für das Venturi-Ventil 361 beispielsweise mittels eines verfügbaren Überdrucks einer Produktionsanlage 364.

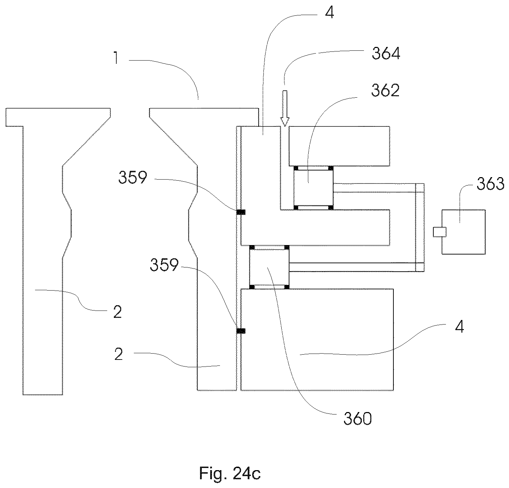

Fig. 24c zeigt eine weitere Ausführungsform der Blasformanordnung 1 bei der der Unterdruck mittels einer mechanischen Kopplung des Unterdruckzylinders 360 mit einem weiteren Druckzylinder 362 bereitgestellt wird. Dabei wird durch die DruckBeaufschlagung des Druckzylinders 362 eine Auslenkung erzeugt, wodurch der Unterdruckzylinder 360 ebenfalls ausgelenkt wird und somit Unterdruck zwischen der Blasform 2 und der Blasformschale 4 erzeugt, wodurch die Blasform 2 an der Blasformschale 4 arretiert wird. Mittels eines Sensors 363 kann die Wegauslenkung der beiden Zylinder erkannt und bei einer maximal erreichten Wegauslenkung ein Warnsignal ausgegeben werden.

Hierbei kann zur Sicherung des Vakuums bei einem Druckluft oder Stromausfall sowie bei einem Ausfall der Unterdruckerzeugung (zum Beispiel bei Ausfall der Druckluftbereitstellung durch die Produktionsanlage 364) ein Rückschlagventil (nicht gezeigt) oder ein druckgesteuertes Ventil (nicht gezeigt), welches zum Beispiel in Abhängigkeit des vorliegenden Über- oder Unterdruckes aktiviert wird, in der Blasformanordnung angeordnet sein, sodass der vorhandene Unterdruck bzw. das Vakuum eingeschlossen und dadurch konstant gehalten werden kann.

Vorteilhaft weist die Blasformanordnung auch eine Sensoreinrichtung zur Bestimmung eine Druckes zwischen der Blasformeinheit und dem Blasformhalter auf. Unter Verwendungen der Ergebnisse einer derartigen Druckmessung könnte ein entsprechender Unterdruck geregelt werden, aber auch im Bedarfsfall, etwa, wenn der Druck zu stark ansteigt, die Maschine, an der sich die Blasformanordnung befindet, angehalten werden.

Es wäre jedoch auch möglich, Vakuumquellen wie beispielsweise Vakuumpumpen vorzusehen. So könnte eine Vakuumpumpe auch gleichzeitig mehrere Blasformanordnungen betätigen.

### Bezugszeichenliste

- 1: Blasformanordnung
- 2: Blasform
- 2a: Teil einer Blasform 2/Blasform
- 4: Blasformschale
- 4a: Hälfte einer Blasformschale 4 / Formträger/Mutterform
- 7: Ausnehmung
- 8: Hohlraum
- 9: Formträger
- 10: Verriegelungsmechanismus
- 11: Unterer Bereich der Blasformschale
- 12: Eingriffselement
- 13: Mutterform
- 14: Betätigungselement
- 16: Nut
- 18: Ausnehmungen
- 19: Öffnung für Bolzen
- 20: Träger
- 22: Kugelkörper
- 23: Mulden
- 24: Laufbahnen
- 28: Außenfläche
- 32: Federungseinrichtung
- 33: Ausnehmung
- 34: Schraubkörper/Schraubenmutter
- 38: Vorsprung
- 39: Ausnehmung
- 50: Eingriffskörper
- 52: Eingriffselement
- 52a: Teilfläche
- 53: Stange/Wellen
- 54: Betätigungselement/Sechskantkopf
- 57: Ausnehmungen
- 59: Umlaufende Abschnitte
- 62: Stege
- 70: Verriegelungsmechanismus
- 72: Eingriffselement/Anschläge
- 72a: Keilflächen
- 74: Hebel
- 75: Ausnehmung
- 76: Arretierelement
- 80: Verriegelungsmechanismus
- 81: Schraubverbindung
- 82: Arretiervorsprung
- 83: Ausnehmung
- 84: Träger
- 85: Federelement
- 86a/b: Arretierköpfe
- 87: Schrägfläche
- 88: Zunge
- 88a: Vorsprung
- 88b: Ausnehmung
- 94: Federelement/Bohrung
- 96: Bohrung
- 104: Vorsprung
- 106: Ausnehmung
- 107: Vorsprung
- 112: Vorsprung
- 114: Ausnehmung
- 116: Ausnehmung
- 117: Vorsprung
- 118: Ausnehmung
- 122: Federungseinrichtung
- 124: Ausnehmung
- 126: Ausnehmung
- 128: Anschlag
- 132: Federungseinrichtung
- 136: Aussparung
- 142: Federungseinrichtung
- 145: Ausnehmung
- 152: Federungseinrichtung
- 154: Bolzen
- 155: Ausnehmung
- 158: Regulierkörper
- 162: Vorsprung
- 164: Ausnehmung
- 165: Bolzen
- 181: Öffnung
- 182: Öffnung
- 183: Löcher
- 184: Stange, stangenförmiger Körper
- 186: Vorsprung
- 187: Stange, stangenförmiger Körper
- 189: Magnet
- 191: Anschlag
- 192: Stange
- 193: Hebel
- 194: Halterung
- 195: Eingriffselement
- 197: Ausnehmung der Blasform
- 198: Ausnehmung des Träger
- 199: Träger
- 202: Blasform
- 204: Blasformträger
- 212: Eingriffselement
- 214: Betätigungsmittel (Schraube)
- 300: Federelement
- 301: Druckelement
- 302: Verklebung
- 303: Ventil
- 304: Ausnehmung
- 307: Ausnehmung
- 310: Zugstange
- 311: Ausfräsung
- 312: Federndes Eingriffselement
- 314: Ausnehmung
- 315: Hebelförmiges Betätigungselement
- 316: Exzenter-Schnellspannelement
- 325: Federnutelement
- 326: Stößel
- 327: zahnradförmiges Eingriffselement
- 328: zahnförmige Ausnehmung
- 337: hakenförmige Ausnehmung
- 338: hakenförmiges Eingriffselement
- 346: Ausnehmung
- 347: Drehachsenelement
- 348: Verbindungselement
- 349: Bolzen
- 359: Dichtungselement
- 360: Unterdruckzylinder
- 361: Venturi-Ventil
- 362: Druckzylinder
- 363: Sensor
- 364: Produktionsanlage
- L: Längsrichtung
- T: Richtung
- E: Ebene
- P1: Pfeil
- R: Richtung
- X: Schwenkachse
- Z: Achse

## Patentansprüche

1. Blasformanordnung (1) zum Umformen von Kunststoffvorformlingen zu Kunststoffbehältnissen mit einer Blasformeinheit (2), welche einen Hohlraum (8) ausbildet, innerhalb dessen die Kunststoffvorformlinge zu Kunststoffbehältnissen expandierbar sind, wobei die Blasformeinheit (2) wenigstens zweiteilig ausgebildet ist, und mit einem Blasformhalter (4) zur Aufnahme der Blasformeinheit, wobei der Blasformhalter (4) wenigstens zwei Formhalterelemente (4a, 4b) zur Aufnahme von Teilen (2a, 2b) der Blasformeinheit (2) aufweist, und mit einem Verriegelungsmechanismus (10), um wenigstens einen Teil (2a) der Blasformeinheit (2) gegenüber wenigstens einem Formhalterelement (4a) zu arretieren, wobei der Verriegelungsmechanismus (10) ein bezüglich einer vorgegebenen Achse (X) schwenkbares Eingriffselement (12, 52) aufweist, welches in einem arretierten Zustand des Teils (2a) der Blasformeinheit (2) gegenüber einem Formhalterelement (4a) an einem Abschnitt des Teils (2a) der Blasformeinheit (2) anliegt,
wobei der Verriegelungsmechanismus (10) ein Betätigungselement (14, 54) aufweist, um eine Arretierung zwischen dem Formhalterelement (4a) und der Blasformeinheit (2) zu lösen und eine Bewegung dieses Betätigungselements (14, 54) mit der Bewegung des Eingriffselements (12, 52) gekoppelt ist, wobei es sich bei der Blasformeinheit (2) um eine Blasform, die unmittelbar den Hohlraum zur Expansion des Vorformlings ausbildet, handelt, und wobei es sich bei dem Blasformhalter (4) um eine Blasformschale (4a), welche die Blasform unmittelbar aufnimmt handelt, wobei das Eingriffselement wenigstens eine abgerundete Außenfläche aufweist,
**dadurch gekennzeichnet, dass**
diese abgerundete Außenfläche an einem Ende des Eingriffselements vorgesehen sind, welches einem Eingriffsbereich, mit dem das Eingriffselement in einem arretierten Zustand die Blasform kontaktiert, gegenüberliegt.

2. Blasformanordnung (1) nach Anspruch 1,
**dadurch gekennzeichnet, dass**
das Betätigungselement (14, 54) in einer Richtung (Z) verschoben wird, um eine Arretierung des Teils (2a) der Blasform gegenüber der Blasformschale (4a) zu erreichen.

3. Blasformanordnung (1) nach wenigstens einem der vorangegangenen Ansprüche,
**dadurch gekennzeichnet, dass**
in einer gespannten Position bzw. einer verriegelten Position der Blasform die Eingriffselemente (52) an Stegen (62) der Blasformeinheit (2) anliegen.

4. Blasformanordnung (1) nach wenigstens einem der vorangegangenen Ansprüche,
**dadurch gekennzeichnet, dass**
der Verriegelungsmechanismus pneumatisch betätigbar ist.

5. Blasformanordnung (1) nach wenigstens einem der vorangegangenen Ansprüche,
**dadurch gekennzeichnet, dass**
das Eingriffselement (12) an einem Träger (20) angeordnet ist und dieser Träger (20) an dem Blasformhalter (4) angeordnet ist.

6. Blasformanordnung (1) nach wenigstens einem der vorangegangenen Ansprüche,
**dadurch gekennzeichnet, dass**
der Verriegelungsmechanismus (12) wenigstens zwei Eingriffselemente (12) aufweist, und die Blasformeinheit (2) zwischen diesen Eingriffselementen (12) angeordnet ist.

7. Blasformanordnung (1) nach wenigstens einem der vorangegangenen Ansprüche,
**dadurch gekennzeichnet, dass**
das Eingriffselement (12) in wenigstens einer Drehstellung einrastet.

8. Blasformanordnung (1) nach wenigstens einem der vorangegangenen Ansprüche,
**dadurch gekennzeichnet, dass**
das Eingriffselement (12) in genau zwei Drehstellungen einrastet.

9. Blasformanordnung (1) nach wenigstens einem der vorangegangenen Ansprüche,
**dadurch gekennzeichnet, dass**
das Eingriffselement mittels wenigstens zwei Kugelkörpern (22) drehbar gelagert ist, wobei die Kugelkörper (22) in Laufbahnen (24) angeordnet sind.

10. Blasformanordnung (1) nach wenigstens einem der vorangegangenen Ansprüche,
**dadurch gekennzeichnet, dass**
die Blasformanordnung eine Federeinrichtung (32) aufweist, um das Eingriffselement (12) gegenüber dem Träger (20) vorzuspannen.

11. Blasformanordnung (1) nach wenigstens einem der vorangegangenen Ansprüche,
**dadurch gekennzeichnet, dass**
die Blasformanordnung (1) einen Sicherungsmechanismus (38, 39) aufweist, der ein Schließen der Blasformeinheit (2) bei nicht korrekt arretierter Blasformeinheit (2) verhindert.

12. Blasformanordnung (1) nach wenigstens einem der vorangegangenen Ansprüche,
**dadurch gekennzeichnet, dass**
die Blasformanordnung (1) wenigstens zwei Betätigungselemente (14) aufweist und jedes dieser Betätigungselemente (14) jeweils einen Vorsprung (38) und eine Ausnehmung (39) aufweist, wobei in einem geschlossenen Zustand der Blasform (2) wenigstens ein Vorsprung (38) eines Betätigungselements in die Ausnehmung (39) des anderen Betätigungselements eingreift.

13. Blasformanordnung (1) nach wenigstens einem der vorangegangenen Ansprüche,
**dadurch gekennzeichnet, dass**
die Blasformanordnung (1) eine Flüssigkeitsleitung mit wenigstens einem Zuführanschluss zum Zuführen von Flüssigkeit aufweist und der Blasformhalter (4) wenigstens einen Versorgungsanschluss zum Versorgen der Flüssigkeitsleitung aufweist und der Zuführanschluss mit dem Versorgungsanschluss durch einen Verriegelungsvorgang zum Arretieren der Blasformeinheit (2) mit dem Blasformhalter (4) verbindbar ist.

14. Streckblasmaschine mit einer Vielzahl von Blasstationen, in denen Kunststoffvorformlinge zu Kunststoffbehältnissen umformbar sind, wobei wenigstens eine dieser Blasstationen eine Blasformanordnung (1) nach wenigstens einem der vorangegangenen Ansprüche aufweist.

## Claims

1. A blow mould assembly (1) for forming plastic preforms into plastic containers, comprising a blow mould unit (2) forming a cavity (8), within which the plastic preforms can be expanded into plastic containers, wherein said blow mould unit (2) is formed at least in two parts, and comprises a blow mould holder (4) for receiving the blow mould unit, wherein the blow mould holder (4) has at least two mould holder elements (4a, 4b) for receiving parts (2a, 2b) of the blow mould unit (2), and comprising a locking mechanism (10) in order to arrest at least a part (2a) of the blow mould unit (2) in relation to at least one mould holder element (4a), wherein said locking mechanism (10) has an engagement member (12, 52) pivotable in relation to a specified axis (X), which engagement member rests in an arrested state of part (2a) of the blow mould unit (2) in relation to a mould holder element (4a) on a section of the part (2a) of the blow mould unit (2),
wherein the locking mechanism (10) has an actuating member (14, 54), in order to release an arrest between the mould holder element (4a) and the blow mould unit (2), and a movement of this actuating member (14, 54) is coupled to the movement of the engagement member (12, 52), wherein the blow mould unit (2) is a blow mould that directly forms the cavity for expanding the preform, and wherein the blow mould holder (4) is a blow mould shell (4a) that directly receives the blow mould, wherein the engagement member includes at least one rounded outer surface,
**characterized in that**
this rounded outer surface is provided at one end of the engagement member, which is located opposite an engagement area where the engagement member contacts the blow mould in an arrested state.

2. Blow mould assembly (1) as claimed in claim 1,
**characterized in that**
the actuating member (14, 54) is displaced in a direction (Z), in order to achieve an arrest of the part (2a) of the blow mould relative to the blow mould shell (4a).

3. Blow mould assembly (1) as claimed in at least one of the preceding claims,
**characterized in that**
in a clamped position or a locked position of the blow mould the engagement members (52) rest against bars (62) of the blow mould (2).

4. Blow mould assembly (1) as claimed in at least one of the preceding claims,
**characterized in that**
the locking mechanism is pneumatically operable.

5. Blow mould assembly (1) as claimed in at least one of the preceding claims,
**characterized in that**
the engagement member (12) is arranged on a carrier (20) and this carrier (20) is arranged on the blow mould holder (4).

6. Blow mould assembly (1) as claimed in at least one of the preceding claims,
**characterized in that**
the locking mechanism (12) includes at least two engagement members (12) and the blow mould unit (2) is arranged between these engagement members (12).

7. Blow mould assembly (1) as claimed in at least one of the preceding claims,
**characterized in that**
the engagement member (12) latches in at least one rotary position.

8. Blow mould assembly (1) as claimed in at least one of the preceding claims,
**characterized in that**
the engagement member (12) latches in exactly two rotary positions.

9. Blow mould assembly (1) as claimed in at least one of the preceding claims,
**characterized in that**
the engagement member is rotatably supported by means of at least two spherical bodies (22), wherein the spherical bodies (22) are disposed in raceways (24).

10. Blow mould assembly (1) as claimed in at least one of the preceding claims,
**characterized in that**
the blow mould assembly includes a spring unit (32) in order to pretension the engagement member (12) in relation to the carrier (20).

11. Blow mould assembly (1) as claimed in at least one of the preceding claims,
**characterized in that**
the blow mould assembly (1) includes a securing mechanism (38, 39) that prevents the blow mould unit (2) from closing in the case the blow mould unit (2) is not correctly arrested.

12. Blow mould assembly (1) as claimed in at least one of the preceding claims,
**characterized in that**
the blow mould assembly (1) includes at least two actuating members (14) and each of these actuating members (14) includes respectively one projection (38) and one recess (39), wherein in a closed state of the blow mould (2), at least one projection (38) of one actuating member engages in the recess (39) of the other actuating member.

13. Blow mould assembly (1) as claimed in at least one of the preceding claims,
**characterized in that**
the blow mould assembly (1) includes a liquid line with at least one feed connection for feeding liquid and the blow mould holder (4) includes at least one supply connection for supplying the liquid line, and the feed connection can be connected to the supply connection by way of a locking process for arresting the blow mould unit (2) with the blow mould holder (4).

14. A stretch blow moulding machine having a plurality of blow moulding stations, wherein the plastic preforms can be formed into plastic containers, wherein at least one of these blow moulding stations includes a blow mould assembly (1) as claimed in at least one of the preceding claims.

## Revendications

1. Ensemble moule de soufflage (1) pour la transformation d'ébauches en matière plastique en contenants en matière plastique, pourvu d'une unité moule de soufflage (2), laquelle forme une cavité (8) à l'intérieur de laquelle les ébauches en matière plastique peuvent être élargies en contenants en matière plastique, dans lequel l'unité moule de soufflage (2) est réalisée en au moins deux parties, et d'un porte-moule de soufflage (4) destiné à loger l'unité moule de soufflage, dans lequel le porte-moule de soufflage (4) comprend au moins deux éléments de porte-moule (4a, 4b) destinés à loger des parties (2a, 2b) de l'unité moule de soufflage (2), et d'un mécanisme de verrouillage (10), afin de bloquer au moins une partie (2a) de l'unité moule de soufflage (2) par rapport à au moins un élément de porte-moule (4a), dans lequel le mécanisme de verrouillage (10) comprend un élément d'insertion (12, 52) qui peut pivoter et/ou coulisser par rapport à un axe (X) prédéfini et qui, une fois la partie (2a) de l'unité moule de soufflage (2) bloquée par rapport à un élément de porte-moule (4a), s'applique contre une section de la partie (2a) de l'unité moule de soufflage (2),
dans lequel le mécanisme de verrouillage (10) comprend un élément d'actionnement (14, 54), afin de libérer un blocage entre l'élément de porte-moule (4a) et l'unité moule de soufflage (2) et un mouvement de cet élément d'actionnement (14, 54) est couplé au mouvement de l'élément d'insertion (12, 52), dans lequel l'unité de moulage par soufflage (2) est un moule de soufflage qui forme directement la cavité pour l'expansion de la préforme, et dans lequel le support de moule de soufflage (4) est un porte-moule de soufflage (4a), qui reçoit directement le moule de soufflage, dans lequel l'élément d'insertion présente au moins une surface extérieure arrondie,
**caractérisé en ce que**
cette surface extérieure arrondie est prévue à une extrémité de l'élément d'insertion qui fait face à une zone d'engagement avec laquelle l'élément d'engagement entre en contact avec le moule de soufflage dans un état bloqué.

2. Ensemble moule de soufflage (1) selon la revendication 1,
**caractérisé en ce que**
l'élément d'actionnement (14, 54) coulisse dans une direction (Z), afin d'obtenir un blocage de la partie (2a) du moule de soufflage par rapport à l'élément de porte-moule (4a).

3. Ensemble moule de soufflage (1) selon au moins l'une des revendications précédentes,
**caractérisé en ce que**
dans une position serrée ou une position verrouillée du moule de soufflage, les éléments d'insertion (52) s'appliquent contre des éléments jointifs (62) du moule de soufflage (2).

4. Ensemble moule de soufflage (1) selon au moins l'une des revendications précédentes,
**caractérisé en ce que**
le mécanisme de verrouillage peut être actionné de manière pneumatique.

5. Ensemble moule de soufflage (1) selon au moins l'une des revendications précédentes,
**caractérisé en ce que**
l'élément d'insertion (12) est agencé sur un support (20) et ce support (20) est agencé sur le porte-moule de soufflage (4).

6. Ensemble moule de soufflage (1) selon au moins l'une des revendications précédentes,
**caractérisé en ce que**
le mécanisme de verrouillage (12) comprend au moins deux éléments d'insertion (12), et l'unité moule de soufflage (2) est agencée entre ces éléments d'insertion (12).

7. Ensemble moule de soufflage (1) selon au moins l'une des revendications précédentes,
**caractérisé en ce que**
l'élément d'insertion (12) s'enclenche dans au moins une position de rotation.

8. Ensemble moule de soufflage (1) selon au moins l'une des revendications précédentes,
**caractérisé en ce que**
l'élément d'insertion (12) s'enclenche dans exactement deux positions de rotation.

9. Ensemble moule de soufflage (1) selon au moins l'une des revendications précédentes,
**caractérisé en ce que**
l'élément d'insertion est monté en rotation au moyen d'au moins deux corps sphériques (22), dans lequel les corps sphériques (22) sont agencés dans des voies de roulement (24).

10. Ensemble moule de soufflage (1) selon au moins l'une des revendications précédentes,
**caractérisé en ce que**
l'ensemble moule de soufflage comprend un dispositif à ressort (32), afin de pré-contraindre l'élément d'insertion (12) par rapport au support (20).

11. Ensemble moule de soufflage (1) selon au moins l'une des revendications précédentes,
**caractérisé en ce que**
l'ensemble moule de soufflage (1) comprend un mécanisme de sécurisation (38, 39), qui empêche une fermeture de l'unité moule de soufflage (2) lorsque l'unité moule de soufflage (2) n'est pas correctement bloquée.

12. Ensemble moule de soufflage (1) selon au moins l'une des revendications précédentes,
**caractérisé en ce que**
l'ensemble moule de soufflage (1) comprend au moins deux éléments d'actionnement (14) et chacun de ces éléments d'actionnement (14) présente respectivement une partie saillante (38) et un évidement (39), dans lequel, une fois le moule de soufflage (2) fermé, au moins une partie saillante (38) d'un élément d'actionnement s'insère dans l'évidement (39) de l'autre élément d'actionnement.

13. Ensemble moule de soufflage (1) selon au moins l'une des revendications précédentes,
**caractérisé en ce que**
l'ensemble moule de soufflage (1) comprend une conduite de liquide pourvue d'au moins un raccord d'amenée pour l'amenée de liquide et le porte-moule de soufflage (4) comprend au moins un raccord d'alimentation pour l'alimentation de la conduite de liquide, et le raccord d'amenée peut être relié au raccord d'alimentation par un processus de verrouillage pour bloquer l'unité moule de soufflage (2) avec le porte-moule de soufflage (4).

14. Machine d'étirage-soufflage comprenant une pluralité de stations de soufflage dans lesquelles des ébauches en matière plastique peuvent être transformées en contenants en matière plastique, dans lequel au moins une de ces stations de soufflage comprend un ensemble moule de soufflage (1) selon au moins l'une des revendications précédentes.
